(19) **Europäisches Patentamt / European Patent Office / Office européen des brevets**

(11) **EP 3 937 563 A1**

(12) # EUROPEAN PATENT APPLICATION
published in accordance with Art. 153(4) EPC

(43) Date of publication:
**12.01.2022 Bulletin 2022/02**

(21) Application number: **19926466.4**

(22) Date of filing: **23.04.2019**

(51) Int Cl.:
**H04W 72/04** (2009.01)  **H04L 1/18** (2006.01)

(86) International application number:
**PCT/CN2019/083969**

(87) International publication number:
**WO 2020/215228 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CHEN, Wenhong**
  **Dongguan, Guangdong 523860 (CN)**
• **FANG, Yun**
  **Dongguan, Guangdong 523860 (CN)**

(74) Representative: **Taor, Simon Edward William et al
Venner Shipley LLP
200 Aldersgate
London EC1A 4HD (GB)**

(54) **UPLINK CONTROL CHANNEL TRANSMISSION METHOD, USER EQUIPMENT AND NETWORK DEVICE**

(57)  The present disclosure relates to an uplink control channel transmission method, user equipment and network device, including: determining a plurality of physical uplink control channel (PUCCH) resources for transmitting the same uplink control information (UCI); and transmitting the UCI on the plurality of PUCCH resources.

The implementations provided by the present disclosure may realize repeated transmission of the same uplink control information on multiple uplink control channel resources, thereby obtaining more diversity gains and improving PUCCH transmission reliability.

EP 3 937 563 A1

determining a plurality of PUCCH resources for transmitting the same uplink control information (UCI) — 110

generating and sending a first message to a user equipment — 120

receiving the UCI transmitted by the user equipment on the plurality of PUCCH resources determined according to the first message — 130

Fig.7

**Description**

**TECHNICAL FIELD**

The present disclosure relates to the field of communication technologies, in particular to an uplink transmission mode in a communication process.

**BACKGROUND**

In a New Radio (NR) system of the 5th generation (5G) mobile communication system, high-frequency communication and massive MIMO technologies are introduced. Specifically, the high-frequency communication can provide a wider system bandwidth and a smaller antenna size, which is more conducive to deployment of massive MIMO in a base station and user equipment (UE). Therefore, large-scale multiple-input multiple-output (MIMO) technologies and multi-beam/multi-transmit receive point technologies are better applied.

Although a transmission scenario for a downlink multi-beam/multi-transmit receive point in the NR system and a multi-beam transmission mode of single or multiple PDCCH scheduling PDSCH have been given, a transmission mode of an uplink multi-beam/multi-transmit receive point is not given. Therefore, even when the user equipment is configured with a plurality of uplink antenna panels, or when a network device has a plurality of TRPs or panels that can be used to receive PUCCH, the user equipment cannot use different beams on different panels for physical uplink control channel (PUCCH) repetition, and the network device also cannot use different beams to transmit PUCCH with respect to different TRP/Panel receptions, to obtain better reception performance, thereby affecting transmission reliability of PUCCH.

**SUMMARY**

The technical problem to be solved by the present disclosure is to provide an uplink control channel transmission method, user equipment and network device that can realize uplink multi-beam transmission.

The present disclosure provides the following technical solutions:

An uplink control channel transmission method, which is used for a user equipment, and includes: determining a plurality of physical uplink control channel (PUCCH) resources for transmitting the same uplink control information (UCI); and transmitting the UCI on the plurality of PUCCH resources.

A user equipment, including: a determining module, configured to determine a plurality of physical uplink control channel (PUCCH) resources for transmitting the same uplink control information (UCI); and a transmitting module, configured to transmit the UCI on the plurality of PUCCH resources.

A user equipment, including: a processor and a memory, wherein the memory stores an uplink control channel transmission program that is capable of being run on the processor, and the processor, when executing the uplink control channel transmission program, implements any uplink control channel transmission method for the user equipment.

A computer-readable storage medium having an uplink control channel transmission program stored thereon, wherein the uplink control channel transmission program, when executed by a processor, implements any uplink control channel transmission method for the user equipment.

An uplink control channel transmission method, which is applied to a network device, and includes: determining a plurality of physical uplink control channel (PUCCH) resources for transmitting the same uplink control information (UCI); generating a first message and sending it to a user equipment, wherein the first message is used by the user equipment to determine the plurality of PUCCH resources, and wherein the first message is downlink control information (DCI) for scheduling a physical downlink shared channel (PDSCH) corresponding to the UCI or a high layer signaling for configuring transmission of the UCI; and receiving the UCI transmitted by the user equipment on the plurality of PUCCH resources determined according to the first message.

A network device, including: a resource determining module, configured to determine a plurality of physical uplink control channel (PUCCH) resources for transmitting the same uplink control information (UCI); an indicating module, configured to generate a first message and sending it to a user equipment, and to indicate the plurality of PUCCH resources to the user equipment, wherein the first message is downlink control information (DCI) for scheduling a physical downlink shared channel (PDSCH) corresponding to the UCI or a high layer signaling for configuring transmission of the UCI; and a receiving module, configured to receive the UCI transmitted by the user equipment on the plurality of PUCCH resources determined according to the first message.

A network device, including: a processor and a memory, wherein the memory stores an uplink control channel transmission program that is capable of being run on the processor, and the processor, when executing the uplink control channel transmission program, implements any uplink control channel transmission method for the network device.

A computer-readable storage medium having an uplink control channel transmission program stored thereon, wherein the uplink control channel transmission program, when executed by a processor, implements any uplink control channel transmission method for the network device.

The beneficial effect of the present disclosure is that, in specific implementations provided by the present disclosure, the plurality of PUCCH resources that transmit the same UCI are determined first, and then the UCI is transmitted on the plurality of PUCCH resources, thereby realizing a purpose of repeatedly transmitting the same UCI on the plurality of PUCCH resources. In this way, when the user equipment is configured with a plurality of uplink panels, different beams can be adopted on different panels to perform PUCCH repetition, thereby obtaining more diversity gains and improving PUCCH transmission reliability.

**BRIEF DESCRIPTION OF THE DRAWINGS**

FIG. 1 is a schematic diagram of a PUCCH resource configuration method in an application environment of a specific embodiment of the present disclosure.

FIG. 2A is a schematic diagram of PUSCH transmission based on a multi-antenna panel in an application environment of a specific embodiment of the present disclosure.

FIG. 2B is a schematic diagram of PUCCH transmission based on a multi-antenna panel in an application environment of a specific embodiment of the present disclosure.

FIG. 3 is a schematic diagram of repeated PUSCH transmission based on a slot in an application environment of a specific embodiment of the present disclosure.

FIG. 4 is a schematic diagram of repeated PUSCH transmission based on an antenna panel in an application environment of a specific embodiment of the present disclosure.

FIG. 5 is a schematic diagram of repeated PUSCH transmission based on a slot in an application environment of a specific embodiment of the present disclosure.

FIG. 6 is a schematic diagram of repeated PUSCH transmission based on a panel in an application environment of a specific embodiment of the present disclosure.

FIG. 7 is a flowchart of an uplink control channel transmission method in a specific embodiment of the present disclosure.

FIG. 8 is a schematic diagram of a first PUCCH resource indication mode in a specific embodiment of the present disclosure.

FIG. 9 is a schematic diagram of a second PUCCH resource indication mode in a specific embodiment of the present disclosure.

FIG. 10 is a schematic diagram of a third PUCCH resource indication mode in a specific embodiment of the present disclosure.

FIG. 11 is a schematic diagram of modules of a network device according to a second embodiment of the present disclosure.

FIG. 12 is a schematic structural diagram of a network device 300 according to a third embodiment of the present disclosure.

FIG. 13 is a flowchart of an uplink control channel transmission method according to a fourth embodiment of the present disclosure.

FIG. 14 is a schematic diagram of a fourth PUCCH resource indication mode in a specific embodiment of the present disclosure.

FIG. 15 is a schematic diagram of a first mapping relationship between spatial relation information and slots in a specific embodiment of the present disclosure.

FIG. 16 is a schematic diagram of a second mapping relationship between spatial relation information and slots in a specific embodiment of the present disclosure.

FIG. 17 is a schematic diagram of a third mapping relationship between spatial relation information and slots in a specific embodiment of the present disclosure.

FIG. 18 is a schematic diagram of a fourth mapping relationship between space related information and slots in a specific embodiment of the present disclosure.

FIG. 19 is a schematic diagram of modules of a user equipment according to a fifth specific embodiment of the present disclosure.

FIG. 20 is a schematic diagram of a hardware structure of a user equipment according to a sixth embodiment of the present disclosure.

**DETAILED DESCRIPTION**

In order to make objectives, technical solutions, and advantages of the present disclosure clearer, the following further describes the present disclosure in detail with reference to the accompanying drawings and embodiments. It should be understood that specific embodiments described herein are only used to explain the present disclosure, but not used to limit the present disclosure. However, the present disclosure can be implemented in many different forms, and is not limited to the embodiments described herein. Rather, the purpose of providing these embodiments is to make the understanding of the disclosure of the present disclosure more thorough and comprehensive.

Unless otherwise defined, all technical and scientific terms used herein have the same meaning as commonly understood by those skilled in the technical field of the present disclosure. The terms used in the description of the present disclosure herein are only for the purpose of describing specific embodiments, and are not intended to limit the present disclosure. The term "and/or" as used herein includes any and all combinations of one or more related listed items.

The specific embodiments of the present disclosure disclose an uplink control channel transmission method, user equipment, and network device. The network device generates and sends a first message to the user equipment, and the user equipment determines a plurality of PUCCH resources for transmitting the same UCI according to the first message, and uses an independent beam to transmit the UCI according to spatial relation information of the respective PUCCH resources.

The specific embodiments of the present disclosure are capable of supporting the transmission of the same UCI on different panels or pointing to different TRPs by repeatedly transmitting the same UCI on the plurality of PUCCH resources and using the independent beam for each transmission, thereby improving UCI transmission reliability through space diversity.

The following is a corresponding table of the abbreviations of key terms appearing in the present disclosure and their full names in English:

| Abbreviation | English full name |
| --- | --- |
| UE | User Equipment |
| NR | New Radio |
| PRB | Physical Resource Block |
| TCI | Transmission Configuration Indicator |
| QCL | Quasi Co-location |
| OFDM | Orthogonal Frequency Division Multiplexing |
| PDSCH | Physical Downlink Shared Channel |
| PUSCH | Physical Uplink Shared Channel |
| PDCCH | Physical Downlink Control Channel |
| PUCCH | Physical Uplink Control Channel |
| DCI | Downlink Control Information |
| TRP | Transmission/reception point |
| RRC | Radio Resource Control |
| CORESET | Control Resource Set |
| CSS | Common Search Space |
| USS | UE-specific Search Space |
| SR | Scheduling Request |
| SRS | Sounding Deference Signal |
| CSI | Channel State Information |
| UCI | Uplink Control Information |

The following first introduces the application environment of the specific embodiments of the present disclosure from three aspects: uplink control channel transmission, uplink antenna panel and repeated uplink transmission.

Uplink control channel transmission:

As shown in Table 1, in the NR, uplink control information (UCI) is carried in PUCCH or PUSCH for transmission. The PUCCH can be used to carry SR, HARQ-ACK or CSI. The PUCCH supports five formats. Durations of PUCCH format 0 and format 2 in a time domain only supports 1-2 OFDM symbols, which is called short PUCCH. Durations of PUCCH format 1, format 3, and format 4 in the time domain can support 4-14 OFDM symbols, which is called long PUCCH. PUCCH format 0 and format 1 are used to carry 1-2 bits of UCI information, and format 2, format 3, and format 4 are used to carry more than 2 bits of UCI information. Compared to PUCCH format 4, the maximum number of UCI bits that PUCCH format 3 can carry is larger. In addition, the PUCCH format 3 does not support multi-user multiplexing, while the PUCCH format 4 supports code division multi-user multiplexing.

Table 1 Different PUCCH formats

| PUCCH format | OFDM symbol length $\left( N_{\text{symb}}^{\text{PUCCH}} \right)$ | UCI information bit number |
|---|---|---|
| 0 | 1-2 | $\leq 2$ |
| 1 | 4-14 | $\leq 2$ |
| 2 | 1-2 | $>2$ |
| 3 | 4-14 | $>2$ |
| 4 | 4-14 | $>2$ |

There are two modes of PUCCH resource allocation: one is a semi-static PUCCH resource allocation mode in which a resource is directly configured by a RRC signaling, and a period and offset are configured for the resource at the same time, and the resource will take effect periodically; and the other is called a dynamic PUCCH resource allocation mode in which one or more PUCCH resource sets are configured by the RRC signaling, and each set contains the plurality of PUCCH resources, after receiving a downlink scheduling signaling sent by the network device, the UE finds a certain PUCCH resource in the PUCCH resource set based on the indication in the downlink scheduling signaling.

In the dynamic PUCCH resource allocation mode, the network device can configure 1-4 PUCCH resource sets through the RRC signaling to carry uplink control information with different load sizes. A first PUCCH resource set is only used to carry 1-2 bits of UCI, and may include 8-32 PUCCH resources, and the number of UCI that other PUCCH resources can carry is configured by the high layer signaling. In addition, in order to save PUCCH overhead, each PUCCH resource may be shared by PUCCH resource sets of a plurality of UEs. When the first PUCCH resource set is configured with 8 PUCCH resources, the user equipment may directly determine the PUCCH resource according to 3-bit PUCCH resource indication information in the DCI used to schedule the PDSCH. If more than 8 PUCCH resources are configured, the PUCCH needs to be determined according to a formula before a RRC connection is established. For other PUCCH resource sets, each resource set can only be configured with 8 PUCCH resources at most, so that the PUCCH resource used can be indicated through the PUCCH resource indication information.

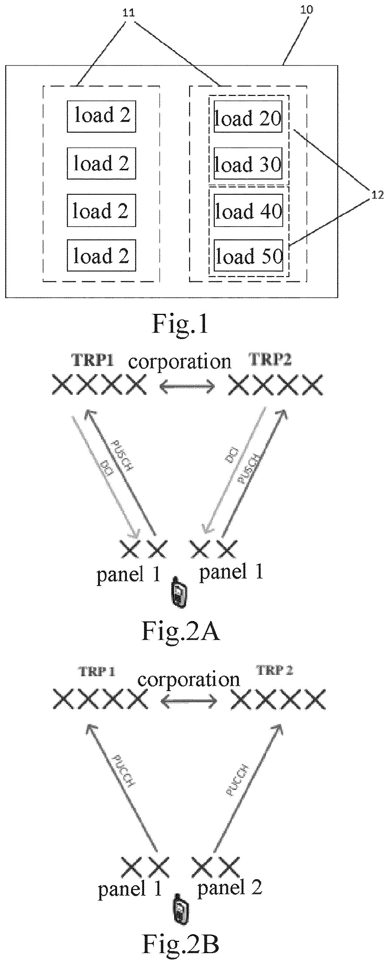

Referring to FIG. 1 which is a schematic diagram of a PUCCH resource configuration mode. All PUCCH resources 10 include at least one PUCCH resource set 11 which is further divided into several PUCCH resource subsets 12, and the PUCCH resource subset 12 includes several PUCCH resources. In order to determine the beam used for the PUCCH transmission, RRC+MAC signaling is used in the NR to indicate the beam used for the UCI transmission on each PUCCH resource. Specifically, N pieces of PUCCH spatial relation information (PUCCH-spatialrelationinfo) are configured first through the high layer signaling, and then the spatial relation information corresponding to each PUCCH resource is determined from the N pieces of information through the MAC signaling.

Uplink antenna panel:

Referring to FIG. 2 which is a schematic diagram of PUSCH (left) and PUCCH (right) transmission based on a multi-antenna panel, the user equipment can have a plurality of panels for uplink transmission. One panel contains a set of physical antennas, and each panel has an independent radio frequency channel. The user equipment needs to notify the network device of the number of configured antenna panels in the capability report. In addition, the user equipment may also need to notify the network device whether it has the ability to simultaneously transmit signals on a plurality of antenna panels. Since channel conditions corresponding to different panels are different, different panels need to adopt different transmission parameters according to their respective channel information. In order to obtain these transmission parameters, different panels need to be configured with different SRS resources to obtain uplink channel information. For example, in order to perform uplink beam management, one SRS resource set can be configured for each panel, thereby performing beam management on each panel respectively and determining an independent analog beam. In order to obtain precoding information used for PUSCH transmission, it is also possible to configure one SRS resource set for each panel to obtain the transmission parameter such as the beam, a precoding vector, and the number of transmission layers used by the PUSCH transmitted on the panel. In addition, multi-panel transmission can also be applied to PUCCH, that is, the information carried by the PUCCH resource on the same PUCCH resource or the same time domain resource can be sent to the network device through different panels at the same time. Each panel can have its own panel ID, which is used to associate different signals transmitted on the same panel, that is, the user equipment can consider that the signals associated with the same panel ID (Panel Identification, antenna panel identification) need to be transmitted on the same panel.

Uplink repeated transmission:

In order to improve the transmission reliability of PUSCH, NR introduces repeated transmission of PUSCH, that is, PUSCH carrying the same data is transmitted a plurality of times through different resources/antennas/redundancy versions, etc., so as to obtain diversity gain and reduce the probability of false detection (BLER).

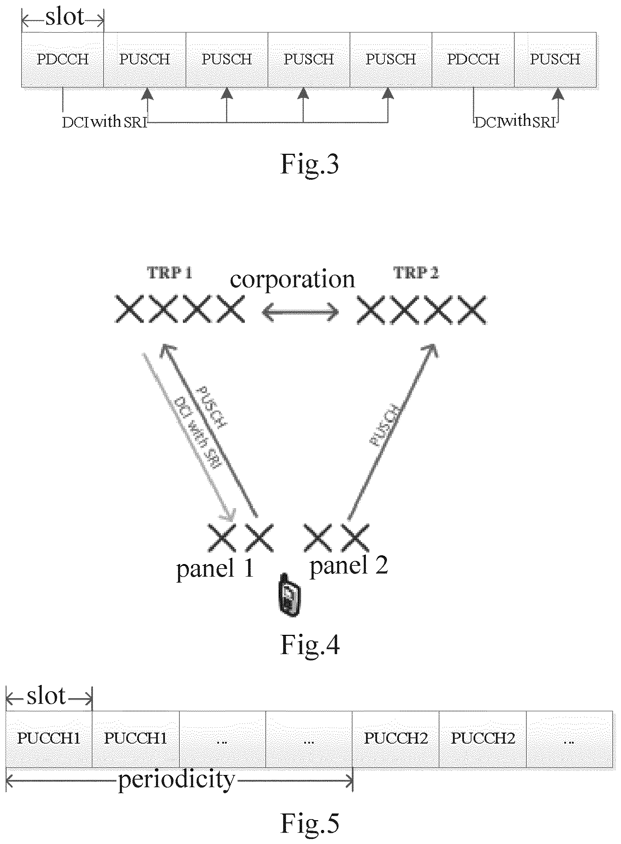

Specifically, referring to FIGS. 3 and 4, the repeated transmission can be performed in a plurality of slots (FIG. 3) or on a plurality of panels (FIG. 4). For multi-slot repetition, one DCI can schedule a plurality of slots, or the OFDM symbol is transmitted on a plurality of consecutive slots, and carries the same data but uses different redundancy versions. For multi-panel repetition, PUSCHs carrying the same data are transmitted on different panels, respectively, and the receiving end can be the same TRP or different TRPs.

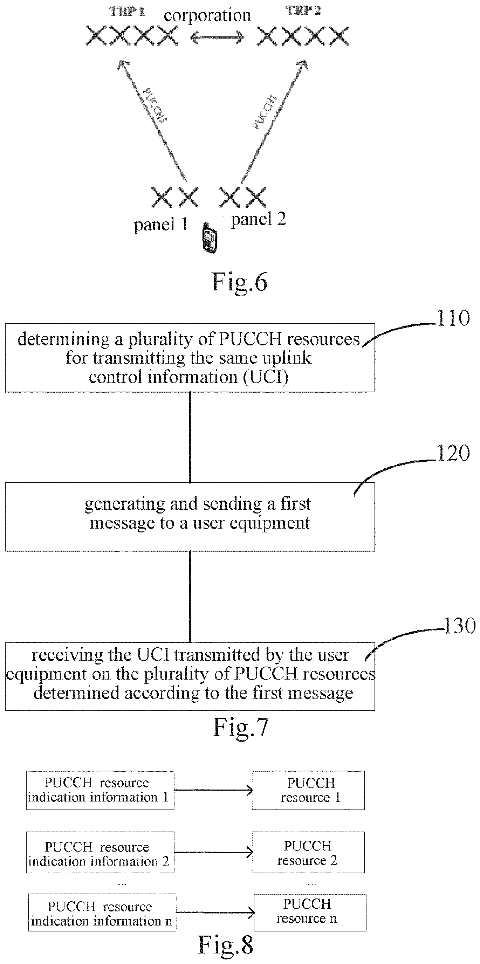

Referring to FIGS. 5 and 6, similar to PUSCH, PUCCH can also support repeated transmission, that is, PUCCH carrying the same uplink control information is transmitted a plurality of times through different resources or antennas to obtain diversity gain and reduce the probability of false detection (BLER). Specifically, the repeated transmission can be performed on a plurality of slots (as shown in FIG. 5), and can also be performed on a plurality of panels (as shown in FIG. 6). For multi-slot repetition, the network device configures the corresponding number of repetitions N (nrofSlots) for each PUCCH format through the RRC signaling. After receiving the signaling, the user equipment uses the same physical resource to transmit the same uplink control information in the consecutive N slots. For multi-panel repetition, PUCCHs carrying the same information are transmitted on different panels, respectively, and the receiving end can be the same TRP or different TRPs.

A system architecture used in the following specific embodiments of the present disclosure is: in the NR, the uplink control information (UCI) is carried in PUCCH or PUSCH for transmission. The user equipment is provided with a plurality of panels for uplink transmission. One panel contains a set of physical antennas, and each panel has an independent radio frequency channel. The user equipment notifies the network device of the number of configured antenna panels in the capability report and the ability of simultaneously transmitting the signals on a plurality of antenna panels. Each Panel can have its own panel ID, which is used to associate different signals transmitted on the same Panel. In addition, multi-panel transmission can also be applied to PUCCH, that is, the information carried by the PUCCH resource on the same PUCCH resource or the same time domain resource can be sent to the network device through different panels at the same time.

In order to improve the transmission reliability of PUSCH, NR introduces repeated transmission of PUSCH, that is, PUSCH carrying the same data is transmitted a plurality of times through different resources/antennas/redundancy versions, etc., so as to obtain diversity gain and reduce the probability of false detection. Similar to PUSCH, PUCCH can also support the repeated transmission, that is, PUCCH carrying the same uplink control information is transmitted a plurality of times through different resources or antennas, thereby obtaining diversity gain and reducing the probability of false detection.

The following specific embodiments of the present disclosure will elaborate on how the user equipment confirms the plurality of PUCCH resources, and how to determine the spatial relation information of each repetition when performing PUCCH repetition. And according to spatial relation information of the respective PUCCH resources, the UCI is transmitted by using independent beams. In this way, the same UCI is repeatedly transmitted on the plurality of PUCCH resources, and each transmission adopts an independent beam, which can support the transmission of the same UCI on different panels or pointing to different TRPs, thereby improving the UCI transmission reliability through space diversity.

First Specific embodiment

Referring to FIG. 7, the first specific embodiment of the present disclosure provides a flow of an uplink control channel transmission method, which is applied to a network device and includes the following.

In a step 110, a plurality of PUCCH resources for transmitting the same uplink control information (UCI) are determined.

The "plurality" mentioned in all the specific embodiments of the present disclosure means at least two.

Specifically, for each PUCCH resource of the plurality of PUCCH resources, at least one of the following parameters is the same: a starting PRB (for example, using the RRC parameter starting PRB), an intra-slot frequency hopping configuration (for example, using the RRC parameter intraSlotFrequencyHopping), a PUCCH format (for example, using RRC parameter format), a starting OFDM symbol (for example, using RRC parameter startingSymbolIndex), the number of occupied OFDM symbols (for example, using RRC parameter nrofSymbols), and a PUCCH resource set where the PUCCH resource is located. Further, when the UCI is CSI, the parameter may also include: a resource period (for example, using the RRC parameter reportSlotConfig), and a slot offset (for example, using the RRC parameter reportSlotConfig).

Specifically, in this specific embodiment, the plurality of PUCCH resources may be a plurality of PUCCH resources configured on the network side for transmitting the same UCI, or may also be repetitions of a target PUCCH resource on a plurality of slots or a plurality of OFDM symbols, and may be configured to repeatedly transmit the UCI carried by the target PUCCH resource. In this specific embodiment, the plurality of slots are continuous slots, and the plurality of OFDM symbols are continuous OFDM symbols.

In a step 120, a first message is generated and it is sent to a user equipment for indicating to the user equipment the plurality of PUCCH resources and/or the number of the plurality of PUCCH resources, and the first message is downlink control information (DCI) for scheduling a physical downlink shared channel (PDSCH) corresponding to the UCI or a high layer signaling for configuring transmission of the UCI.

Specifically, when the UCI is HARQ-ACK information, the first message is the DCI for scheduling a PDSCH corresponding to the HARQ-ACK information; when the UCI is CSI report, the first message is a RRC signaling for configuring a PUCCH parameter set (for example, using the RRC parameter PUCCH-config), and a RRC signaling for configuring the CSI report or the MAC signaling for activating the CSI report.

In a step 130, the UCI transmitted by the user equipment on the plurality of PUCCH resources determined according to the first message is received.

Preferably, the step 130 further includes: the network device performs the UCI detection after merging PUCCH signals on the plurality of PUCCH resources. Specifically, the network device may perform the UCI detection after softly merging the PUCCH signals on the plurality of PUCCH resources. Alternatively, the network device may also detect the UCI transmitted on the plurality of PUCCH resources respectively, until the UCI is successfully detected on a certain PUCCH resource.

Specifically, in the step 120 of generating the first message and sending it to the user equipment for indicating to the user equipment the plurality of PUCCH resources, the plurality of PUCCH resources may be indicated in one of the following manners:

Manner 1: referring to FIG. 8, the first message contains a plurality of pieces of PUCCH resource indication information, and each of at least two pieces of indication information is used for indicating at least one PUCCH resource of the plurality of PUCCH resources. Preferably, the first message contains the plurality of pieces of PUCCH resource indication information, each of which is used for indicating at least one PUCCH resource of the plurality of PUCCH resources, respectively. The following is a description with a less preferred solution, but it does not limit this specific embodiment.

For example, if the UCI is the HARQ-ACK information, the DCI for scheduling the PDSCH corresponding to the HARQ-ACK information may include N pieces of PUCCH resource indication information, and the user equipment determines one PUCCH resource according to each piece of indication information, respectively, thereby obtaining N PUCCH resources. A length of each piece of PUCCH resource indication information is 3 bits.

For example, if the UCI is the CSI report, the RRC signaling for configuring the CSI report may include N pieces of PUCCH resource indication information, and the user equipment determines one periodic PUCCH resource according to each piece of indication information, thereby obtaining the N PUCCH resources.

Manner 2: the first message contains one piece of PUCCH resource indication information, which is used for indicating the plurality of PUCCH resources. Specifically, the plurality of PUCCH resources are determined by the user equipment according to the PUCCH resource indication information and at least one of PUCCH resource sets or PUCCH parameter sets pre-configured by the network device.

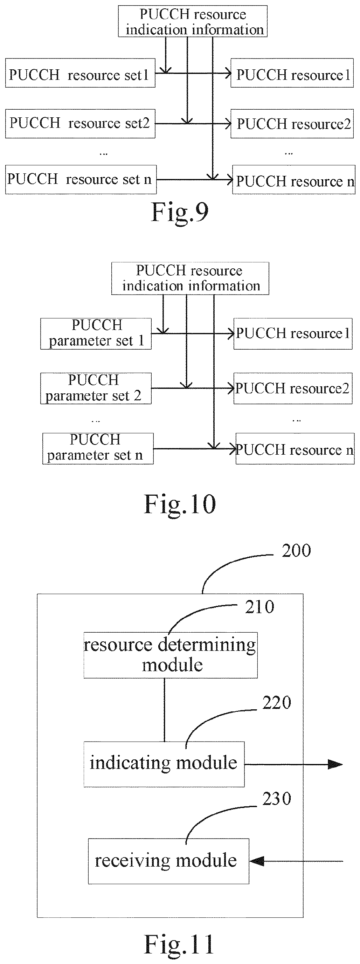

Preferably, referring to FIG. 9, when the network device has pre-configured at least one PUCCH resource set, the user equipment determines one PUCCH resource from at least two PUCCH resource sets of the plurality of PUCCH resource sets, respectively according to the PUCCH resource indication information to obtain the plurality of PUCCH resources.

Preferably, referring to FIG. 10, when the network device configures the plurality of PUCCH parameter sets (for example, using the RRC parameter PUCCH-config), the user equipment determines one PUCCH resource according to the PUCCH resource indication information and at least two PUCCH parameter sets of the plurality of PUCCH parameter sets, respectively to obtains the plurality of PUCCH resources.

Preferably, at least two PUCCH resource sets of the plurality of PUCCH resource sets or at least two PUCCH parameter sets of the plurality of PUCCH parameter sets correspond to one repeated transmission of PUCCH, or correspond to PUCCH transmission on one panel, or correspond to PUCCH transmission for one TRP. By configuring the plurality of PUCCH resource sets or the plurality of PUCCH parameter sets, the plurality of repeated PUCCH transmissions can be flexibly supported, or PUCCH resource allocation on the plurality of panels can be supported, or independent PUCCH resource allocation for a plurality of TRPs can be supported.

Manner 3: the PUCCH resource indication information in the first message is used to indicate the first PUCCH resource, so that the user equipment determines other PUCCH resources of the plurality of PUCCH resources according to the first PUCCH resource. That is to say, the manner in which the network device indicates the first PUCCH resource and the user equipment determines the first PUCCH resource may adopt the existing technology. For the manner in which the user equipment determines other PUCCHs, refer to the following specific embodiments on the user equipment side.

Manner 4: the user equipment determines a plurality of indicator values corresponding to an indicator value of the PUCCH resource indication information according to the indicator value of the PUCCH resource indication information, and determines the plurality of PUCCH resources according to the plurality of indicator values. For details, please refer to the following specific embodiments of the user equipment, which will not be repeated here.

Specifically, in the step 120 of generating the first message and sending it to the user equipment for indicating to the user equipment the plurality of PUCCH resources, the number of the plurality of PUCCH resources may be indicated in one of the following manners, and then the plurality of PUCCH resources are determined according to the number:

when the UCI is HARQ-ACK information, the first message is the DCI for scheduling a PDSCH corresponding to the HARQ-ACK information, that is, the HARQ-ACK information is used to indicate whether the PDSCH is correctly transmitted. For example, the number of the plurality of PUCCH resources may be directly indicated in the DCI.

When the UCI is a CSI report, the first message is the RRC signaling for configuring a PUCCH parameter set used for UCI transmission (for example, the RRC parameter field PUCCH-config), and the RRC signaling for configuring the CSI report (for example, RRC parameter field CSI-ReportConfig) or the MAC signaling for activating the CSI report. For example, if the CSI report is a periodic CSI report, the number may be indicated by the RRC signaling (for example, the RRC parameter field CSI-ReportConfig) that configures the CSI report resource. Alternatively, if the CSI report is a quasi-persistent CSI report, the number may be indicated by the MAC layer signaling that triggers the quasi-persistent CSI report. Or, no matter what kind of UCI, the number is indicated by configuring the RRC signaling (for example, the RRC parameter field PUCCH-config) of the PUCCH parameter set used for UCI transmission.

Specifically, in the step 110 of determining the plurality of PUCCH resources for transmitting the same uplink control information (UCI):

the plurality of PUCCH resources are repetitions of the target PUCCH resource on a plurality of slots or a plurality of OFDM symbols.

Further, the method of this specific embodiment further includes:

configuring a plurality of pieces of spatial relation information for the target PUCCH resource, so that spatial relation information corresponding to the respective repetitions on the plurality of slots or the plurality of OFDM symbols may be determined by user equipment according to a plurality of pieces of spatial relation information.

A correspondence between the plurality of pieces of spatial relation information and the repetitions on the plurality of slots or the plurality of OFDM symbols may be agreed in advance between the network device and the user equipment; or the correspondence between the plurality of pieces of spatial relation information and the repetitions on the plurality of slots or the plurality of OFDM symbols is configured by the network device through the high layer signaling for the user equipment.

Specifically, the user equipment receives N pieces of spatial relation information configured by the network devices for the target PUCCH resource through a MAC layer signaling, and the N pieces of spatial relation information are respectively applied to repetitions of the target PUCCH resource on N slots or N OFDM symbols. The correspondence between the spatial relation information and the repetitions of the target PUCCH resource on N slots or OFDM symbols is described in detail in the following fourth and fifth specific embodiments, and will not be repeated here.

Second Specific Embodiment

Referring to FIG. 11, which is a schematic diagram of modules of a network device according to the second specific embodiment of the present disclosure, the network device 200 includes:

a resource determining module 210, configured to determine a plurality of physical PUCCH resources for transmitting the same uplink control information (UCI).

Specifically, for each PUCCH resource of the plurality of PUCCH resources, at least one of the following parameters is the same: a starting PRB (for example, using the RRC parameter starting PRB), an intra-slot frequency hopping configuration (for example, using the RRC parameter intraSlotFrequencyHopping), a PUCCH format (for example, using RRC parameter format), a starting OFDM symbol (for example, using RRC parameter startingSymbolIndex), the number of occupied OFDM symbols (for example, using RRC parameter nrofSymbols), and a PUCCH resource set where the PUCCH resource is located. Further, when the UCI is CSI, the parameter may also include: a resource period (for example, using the RRC parameter reportSlotConfig), and a slot offset (for example, using the RRC parameter reportSlotConfig).

Specifically, in this specific embodiment, the plurality of PUCCH resources may be a plurality of PUCCH resources configured on the network side for transmitting the same UCI, or may also be repetitions of a target PUCCH resource on a plurality of slots or a plurality of OFDM symbols, and may be configured to repeatedly transmit the UCI carried by the target PUCCH resource. In this specific embodiment, the plurality of slots are continuous slots, and the plurality of OFDM symbols are continuous OFDM symbols.

An indicating module 220 is configured to generate a first message and send it to a user equipment, and configured to indicate the plurality of PUCCH resources to a user equipment, wherein the first message is downlink control information (DCI) for scheduling a physical downlink shared channel (PDSCH) corresponding to the UCI or a high layer signaling for configuring transmission of the UCI.

Specifically, when the UCI is HARQ-ACK information, the first message is the DCI for scheduling a PDSCH corresponding to the HARQ-ACK information; when the UCI is CSI report, the first message is a RRC signaling for configuring a PUCCH parameter set (for example, using the RRC parameter PUCCH-config), and a RRC signaling for configuring the CSI report or the MAC signaling for activating the CSI report.

A receiving module 230 is configured to receive the UCI transmitted by the user equipment on the plurality of PUCCH resources determined according to the first message.

Preferably, the receiving module 230 is further configured to perform UCI detection after merging PUCCH signals on the plurality of PUCCH resources. Specifically, the receiving module 230 may perform the UCI detection after softly merging the PUCCH signals on the plurality of PUCCH resources. Alternatively, the receiving module 230 may also detect the UCI transmitted on the plurality of PUCCH resources, respectively, until the UCI is successfully detected on a certain PUCCH resource.

Specifically, the indicating module 220 may indicate the plurality of PUCCH resources in one of the following manners:

Manner 1: referring to FIG. 8, the first message contains a plurality of pieces of PUCCH resource indication information, and each of at least two pieces of indication information is used for indicating at least one PUCCH resource of the plurality of PUCCH resources. Preferably, the first message contains the plurality of pieces of PUCCH resource indication information, each of which is used for indicating at least one PUCCH resource of the plurality of PUCCH resources, respectively. The following is a description with a less preferred solution, but it does not limit this specific embodiment.

For example, if the UCI is the HARQ-ACK information, the DCI for scheduling the PDSCH corresponding to the HARQ-ACK information may include N pieces of PUCCH resource indication information, and the user equipment determines one PUCCH resource according to each piece of indication information, respectively, thereby obtaining N PUCCH resources. A length of each piece of PUCCH resource indication information is 3 bits.

For example, if the UCI is the CSI report, the RRC signaling for configuring the CSI report may include N pieces of PUCCH resource indication information, and the user equipment determines one periodic PUCCH resource according to each piece of indication information, thereby obtaining the N PUCCH resources.

Manner 2: the first message contains one piece of PUCCH resource indication information, which is used for indicating the plurality of PUCCH resources. Specifically, the plurality of PUCCH resources are determined by the user equipment according to the PUCCH resource indication information and at least one of PUCCH resource sets or PUCCH parameter sets pre-configured by the network device.

Preferably, referring to FIG. 9, when the network device has pre-configured at least one PUCCH resource set, the user equipment determines one PUCCH resource from at least two PUCCH resource sets of the plurality of PUCCH resource sets, respectively according to the PUCCH resource indication information to obtain the plurality of PUCCH resources.

Preferably, referring to FIG. 10, when the network device configures the plurality of PUCCH parameter sets (for example, using the RRC parameter PUCCH-config), the user equipment determines one PUCCH resource according to the PUCCH resource indication information and at least two PUCCH parameter sets of the plurality of PUCCH parameter sets, respectively to obtains the plurality of PUCCH resources.

Preferably, at least two PUCCH resource sets of the plurality of PUCCH resource sets or at least two PUCCH parameter sets of the plurality of PUCCH parameter sets correspond to one repeated transmission of PUCCH, or correspond to PUCCH transmission on one panel, or correspond to PUCCH transmission for one TRP. By configuring the plurality of PUCCH resource sets or the plurality of PUCCH parameter sets, the plurality of repeated PUCCH transmissions can be flexibly supported, or PUCCH resource allocation on the plurality of panels can be supported, or independent PUCCH resource allocation for a plurality of TRPs can be supported.

Manner 3: the PUCCH resource indication information in the first message is used to indicate the first PUCCH resource, so that the user equipment determines other PUCCH resources of the plurality of PUCCH resources according to the first PUCCH resource. The manner in which the network device indicates the first PUCCH resource and the user equipment determines the first PUCCH resource may adopt the existing technology. For the manner in which the user equipment determines other PUCCHs, refer to the following specific embodiments on the user equipment side.

Manner 4: the user equipment determines a plurality of indicator values corresponding to an indicator value according to the indicator value of the PUCCH resource indication information, and determines the plurality of PUCCH resources according to the plurality of indicator values. For details, please refer to the following specific embodiments of the user equipment, which will not be repeated here.

Specifically, the indicating module 220 may indicate the number of the plurality of PUCCH resources in the following manners.

When the UCI is HARQ-ACK information, the first message is the DCI for scheduling a PDSCH corresponding to the HARQ-ACK information, that is, the HARQ-ACK information is used to indicate whether the PDSCH is correctly transmitted. For example, the number of the plurality of PUCCH resources may be directly indicated in the DCI.

When the UCI is a CSI report, the first message is the RRC signaling for configuring a PUCCH parameter set used for UCI transmission (for example, the RRC parameter field PUCCH-config), and the RRC signaling for configuring the CSI report (for example, RRC parameter field CSI-ReportConfig) or the MAC signaling for activating the CSI report. For example, if the CSI report is a periodic CSI report, the number may be indicated by the RRC signaling (for example, the RRC parameter field CSI-ReportConfig) that configures the CSI report resource. Alternatively, if the CSI report is a quasi-persistent CSI report, the number may be indicated by the MAC layer signaling that triggers the quasi-persistent CSI report. Or, no matter what kind of UCI, the number is indicated by configuring the RRC signaling (for example, the RRC parameter field PUCCH-config) of the PUCCH parameter set used for UCI transmission.

Specifically, in the determining module 210 which is specifically configured to determine the plurality of PUCCH resources for transmitting the same uplink control information (UCI):

the plurality of PUCCH resources are repetitions of the target PUCCH resource on a plurality of slots or a plurality of OFDM symbols.

Further, the determining module 210 is also specifically configured to configure a plurality of pieces of spatial relation information for the target PUCCH resource, so that spatial relation information corresponding to the respective repetitions on the plurality of slots or the plurality of OFDM symbols may be determined by user equipment according to a plurality of pieces of spatial relation information.

A correspondence between the plurality of pieces of spatial relation information and the repetitions on the plurality of slots or the plurality of OFDM symbols may be agreed in advance between the network device and the user equipment; or the correspondence between the plurality of pieces of spatial relation information and the repetitions on the plurality of slots or the plurality of OFDM symbols is configured by the network device through the high layer signaling for the user equipment.

Specifically, the determining module 210 is also specifically configured to receive N pieces of spatial relation information configured by the network devices for the target PUCCH resource through a MAC layer signaling, and the N pieces of spatial relation information are respectively applied to repetitions of the target PUCCH resource on N slots or N OFDM symbols. The correspondence between the spatial relation information and the repetitions of the target PUCCH resource on N slots or OFDM symbols is described in detail in the following fourth and fifth specific embodiments, and will not be repeated here.

Third Specific Embodiment

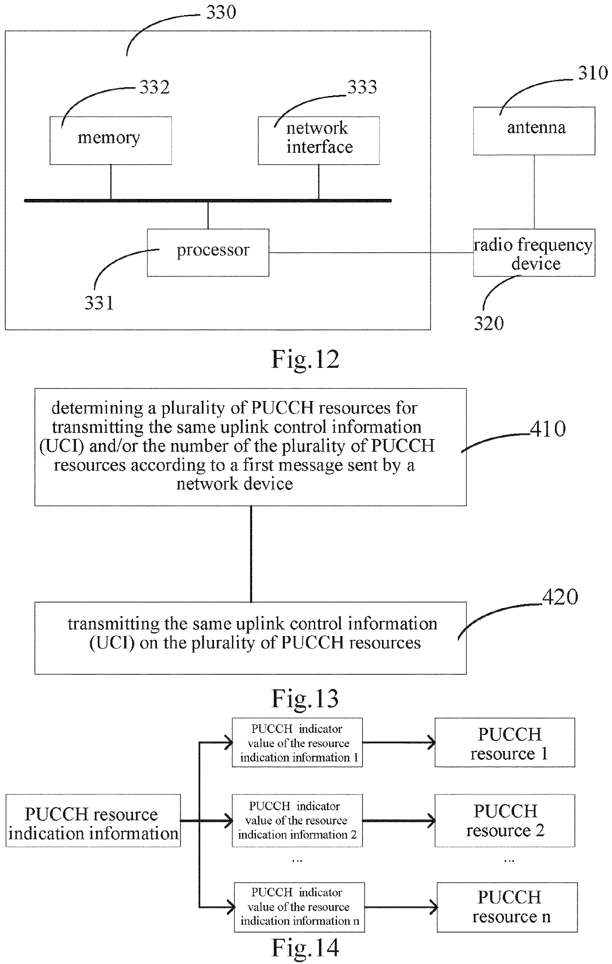

Referring to FIG. 12, which is a schematic structural diagram of a network device 300 according to the third embodiment of the present disclosure. The network device 300 includes an antenna 310, a radio frequency device 320, and a baseband device 330. In an uplink direction, the radio frequency device 320 receives information transmitted by the user equipment through the antenna 310, and sends the received information to the baseband device 330 for processing. In a downlink direction, the baseband device 330 sends the processed information to the radio frequency device 320, and the radio frequency device 320 processes the received information and sends it through the antenna 310.

The baseband device 330 executes the steps of the uplink control channel transmission method provided in the first specific embodiment.

Specifically, the baseband device 330 includes a processor 331, a memory 332, and a network interface 333. The processor 331 calls a program in the memory 332 to execute the steps of the uplink control channel transmission method provided in the first specific embodiment. The network interface 333 exchanges information with the radio frequency device 320, and sends the signal processed by the processor 331 to the radio frequency device 320.

The processor 331 may be an independent component, or may be a collective name for a plurality of processing elements. For example, it may be a CPU, an ASIC, or one or more integrated circuits configured to implement the above methods, such as at least one microprocessor DSP, or at least one programmable gate array FPGA.

Fourth Specific Embodiment

Referring to FIG. 13, which is a flowchart of an uplink control channel transmission method according to the fourth embodiment of the present disclosure, the method is used for the user equipment and includes the following.

In a step 410, a plurality of PUCCH resources for transmitting the same uplink control information (UCI) are determined.

Specifically, for each PUCCH resource of the plurality of PUCCH resources, at least one of the following parameters is the same: a starting PRB (for example, using the RRC parameter starting PRB), an intra-slot frequency hopping configuration (for example, using the RRC parameter intraSlotFrequencyHopping), a PUCCH format (for example, using RRC parameter format), a starting OFDM symbol (for example, using RRC parameter startingSymbolIndex), the number of occupied OFDM symbols (for example, using RRC parameter nrofSymbols), and a PUCCH resource set where the PUCCH resource is located. Further, when the UCI is CSI, the parameter may also include: a resource period (for example, using the RRC parameter reportSlotConfig), and a slot offset (for example, using the RRC parameter reportSlotConfig).

Preferably, the plurality of PUCCH resources occupy different time domain resources, for example, occupying different OFDM symbols or occupying different slots.

Optionally, the step 410 specifically includes:

determining the plurality of PUCCH resources for transmitting the same uplink control information (UCI) according to a first message sent by a network device, wherein the first message is downlink control information (DCI) for scheduling a physical downlink shared channel (PDSCH) corresponding to the UCI or a high layer signaling for configuring transmission of the UCI. The number of the plurality of PUCCH resources may be indicated to the user equipment, and the plurality of PUCCH resources is determined according to the number of the plurality of PUCCH resources.

In a step 420, the same uplink control information (UCI) is transmitted on the plurality of PUCCH resources.

Optionally, the network device configures a corresponding panel ID for each PUCCH resource. For example, it can be configured for each PUCCH resource through the RRC signaling (such as using PUCCH-resource of the RRC parameter), or configured through the spatial relation information of MAC signaling on the PUCCH resource. Then, the user equipment determines the panel corresponding to the PUCCH resource according to the panel ID corresponding to each PUCCH resource, and transmits the UCI on the PUCCH resource through the corresponding panel.

Optionally, the user equipment determines a beam used for transmission of the PUCCH resource according to the spatial relation information corresponding to each PUCCH resource, and uses the beam to transmit the UCI on the PUCCH resource. By using different beams to transmit the same UCI, the effect of improving transmission reliability is obtained.

Optionally, the step 410 of determining the plurality of PUCCH resources according to the first message sent by the network device is specifically determining the number of the plurality of PUCCH resources for transmitting the same uplink control information (UCI) according to the first message sent by the network device.

If the UCI is HARQ-ACK information, the first message is the DCI for scheduling a PDSCH corresponding to the HARQ-ACK information, that is, the HARQ-ACK information is used to indicate whether the PDSCH is correctly transmitted. For example, the number of the plurality of PUCCH resources may be directly indicated in the DCI.

If the UCI is a CSI report, the first message is the RRC signaling for configuring a PUCCH parameter set used for UCI transmission (for example, the RRC parameter field PUCCH-config), and the RRC signaling for configuring the CSI report (for example, RRC parameter field CSI-ReportConfig) or the MAC signaling for activating the CSI report. For example, if the CSI report is a periodic CSI report, the number may be indicated by the RRC signaling (for example, the RRC parameter field CSI-ReportConfig) that configures the CSI report resource. Alternatively, if the CSI report is a quasi-persistent CSI report, the number may be indicated by the MAC layer signaling that triggers the quasi-persistent CSI report. Or, no matter what kind of UCI, the number is indicated by configuring the RRC signaling (for example, the RRC parameter field PUCCH-config) of the PUCCH parameter set used for UCI transmission.

The number of the plurality of PUCCH resources that transmit the same UCI may also be expressed as the number of repetitions of one UCI or the number of PUCCH repetitions.

Further, after the number of the plurality of PUCCH resources is determined according to the first message, the plurality of PUCCH resources may be further determined according to the number. Specifically, the following several manners may be referred to.

Specifically, the step 410 of determining the plurality of PUCCH resources for transmitting the same uplink control information (UCI) according to the first message sent by the network device may determine the PUCCH resource by one of the following manners.

Optional manner one: please refer to FIG. 8, the first message contains a plurality of pieces of PUCCH resource indication information, and the user equipment determines at least one PUCCH resource of the plurality of PUCCH resources, respectively according to each of at least two pieces of indication information. Preferably, the first message contains a plurality of pieces of PUCCH resource indication information, and the user equipment determines at least one PUCCH resource of the plurality of PUCCH resources, respectively according to each piece of indication information. The following is a description with a less preferred solution, but it does not limit this specific embodiment.

In an embodiment, the quantity of the PUCCH resource indication information is the number of the plurality of PUCCH resources that transmit the same UCI, which can be determined in the foregoing manner.

For example, if the UCI is the HARQ-ACK information, the DCI for scheduling the PDSCH corresponding to the HARQ-ACK information may include N pieces of PUCCH resource indication information, and the user equipment determines one PUCCH resource according to at least two pieces of indication information, respectively, thereby obtaining N PUCCH resources. Preferably, a length of each piece of PUCCH resource indication information is 3 bits.

For example, if the UCI is the CSI report, the RRC signaling for configuring the CSI report may include N pieces of PUCCH resource indication information, and the user equipment determines one periodic PUCCH resource according to each piece of indication information, thereby obtaining the N PUCCH resources.

Optional manner 2: the first message contains one piece of PUCCH resource indication information, the user equipment determines the plurality of PUCCH resources according to the PUCCH resource indication information and at least one of PUCCH resource sets or PUCCH parameter sets pre-configured by the network device.

Please referring to FIG. 9, which is a schematic diagram of a PUCCH resource indication method. Optionally, the user equipment receives the plurality of PUCCH resource sets (PUCCH Resource Set) pre-configured by the network device through the high layer signaling, and the plurality of PUCCH resource sets include at least one PUCCH resource (PUCCH Resource), and these resources may adopt the same PUCCH format. The user equipment may determine one PUCCH resource from at least two PUCCH resource sets of the plurality of PUCCH resource sets, respectively, according to the PUCCH resource indication information, so as to obtain the plurality of PUCCH resources. For example, the user equipment may obtain the first PUCCH resource in the plurality of PUCCH resources according to the PUCCH resource indication information and the first PUCCH resource set in the plurality of PUCCH resource sets, and obtain the second PUCCH resource in the plurality of PUCCH resources according to the PUCCH resource indication information and the second PUCCH resource set in the plurality of PUCCH resource sets, and so on.

Please referring to FIG. 10, which is a schematic diagram of another PUCCH resource indication method. Optionally, the user equipment receives the plurality of PUCCH parameter sets (PUCCH-config) pre-configured by the network device through the high layer signaling, and the user equipment determine one PUCCH resource according to the PUCCH resource indication information and at least two PUCCH parameter sets of the plurality of PUCCH parameter sets, respectively, so as to obtain the plurality of PUCCH resources. Specifically, the user equipment may obtain the first PUCCH resource in the plurality of PUCCH resources according to the PUCCH resource indication information and the first PUCCH parameter set of the plurality of PUCCH parameter sets, and obtain the second PUCCH resource in the plurality of PUCCH resources according to the PUCCH resource indication information and the second PUCCH parameter set of the plurality of PUCCH parameter sets, and so on. For example, the PUCCH parameter set includes the configuration of the PUCCH resource set, and the user equipment may determine the plurality of PUCCH resources according to the PUCCH resource indication information and the PUCCH resource set configuration in the plurality of PUCCH resource sets.

Specifically, if the PUCCH carries the HARQ-ACK information, the user equipment may determine the PUCCH resource according to the PUCCH resource indication information and a CCE index used for scheduling the PDSCH corresponding to the HARQ-ACK information.

Specifically, one PUCCH resource set may include 8 or 32 PUCCH resources.

In an implementation of this specific embodiment, the number of the at least one PUCCH resource set or PUCCH parameter set is the number of the plurality of PUCCH resources that transmit the same UCI, which can be determined by the foregoing method.

Optional manner 3, the user equipment determines the first PUCCH resource of the plurality of PUCCH resources according to the PUCCH resource indication information in the first message, and then determines other PUCCH resources according to the first PUCCH resource. The steps of determining other PUCCHs by the user equipment may specifically be the followings.

Optionally, the user equipment obtains resource indexes of other PUCCH resources according to the resource index of the first PUCCH resource, and obtains other PUCCHs from the PUCCH resource set to which the first PUCCH resource belongs according to the resource indexes of other PUCCH resources. Specifically, the user equipment determines that the resource index of the first PUCCH resource is $r_{PUCCH}=k$ according to the PUCCH resource indication information, and the resource indexes of the other m PUCCH resources of the plurality of PUCCH resources may be obtained according to k, respectively, for example, {k+1, k+2,...,k+m} mod R, where R is the number of PUCCH resources included in the PUCCH resource set to which the first PUCCH resource belongs. The resource index is an index of a PUCCH resource in the PUCCH resource set where it is located. The resource index is used to determine the frequency domain resource and sequence resource of the PUCCH.

Optionally, the other PUCCH resources are PUCCH resources that occupy the same frequency domain resource and/or sequence resource as the first PUCCH resource, and an OFDM symbol where the other PUCCH resources are located is behind an OFDM symbol where the first PUCCH resource is located. That is, the other PUCCH resources are PUCCH resources that occupy the same frequency domain resource and/or sequence resource as the first PUCCH resource, and an OFDM symbol where the other PUCCH resources are located is behind an OFDM symbol where the first PUCCH resource is located. For example, if the index of the OFDM symbol where the first PUCCH resource is located is n, then the OFDM symbols where the other m PUCCH resources of the plurality of PUCCH resources are located are {n+1, n+2,..., n +m}, and the frequency domain resources (for example, starting PRB position) and sequence resources (for example, cyclic shift) of the m PUCCH resources are same as those of the first PUCCH resource. Since the frequency domain resource and the sequence resource are determined according to the resource index, this manner can also be described as: the resource indexes of the other m PUCCH resources of the plurality of PUCCH resources are same as that of the first PUCCH resource, but occupied OFDM symbols are different.

Optionally, the other PUCCH resources are PUCCH resources that have the same resource index as the first PUCCH resource in at least one PUCCH resource set other than a PUCCH resource set where the first PUCCH resource is located.

Specifically, the network device configures the plurality of PUCCH resource sets for the user equipment in advance, and the first PUCCH resource set contains the first PUCCH resource, and the resource index of the first PUCCH resource is $r_{PUCCH}=k$. Then the user equipment determines the m PUCCH resources with resource index k among the other m PUCCH resource sets except the first PUCCH resource set among the plurality of PUCCH resource sets as the other PUCCH resources of the plurality of PUCCH resources.

In this optional third manner, the UCI transmitted by different PUCCH resource sets is the same (that is, other PUCCH resource sets are the repetitions of the first PUCCH resource set), and different PUCCH resource sets may correspond to the panels of different user equipment, or correspond to different receiving TRPs, thereby supporting the repeated transmission of PUCCH through the plurality of panels or the plurality of TRPs, and improving the reliability of PUCCH transmission.

In an implementation of this manner, the number of other PUCCH resources is determined according to the number of the plurality of PUCCH resources that transmit the same UCI, for example, the number of the plurality of PUCCH resources minus 1. The number of the plurality of PUCCH resources can be determined by the aforementioned method.

Optional manner 4, the user equipment determines a plurality of indicator values corresponding to an indicator value according to the indicator value of the PUCCH resource indication information, and determines the plurality of PUCCH resources according to the plurality of indicator values.

Referring to FIG. 14, which is a schematic diagram of another PUCCH resource indication method. Optionally, the user equipment obtains the corresponding plurality of indicator values according to the indicator value of the PUCCH resource indication information, and determines at least one PUCCH resource respectively according to at least two indicator values of the plurality of indicator values, thereby determining the plurality of PUCCH resources. Specifically, assuming that the indicator value of the PUCCH resource indication information is k, the user equipment can obtain m corresponding indicator values according to the indicator value, for example {k, k+1,..., k+m-1} mod 8, and then obtain m PUCCH resources respectively according to the m indication values.

Specifically, in the step 410 of determining the plurality of PUCCH resources for transmitting the same uplink control information (UCI), the plurality of PUCCH resources are repetitions of a target PUCCH resource on a plurality of slots or a plurality of OFDM symbols.

Further, the method of this specific embodiment further includes:

determining spatial relation information corresponding to the respective repetitions on the plurality of slots or the plurality of OFDM symbols according to a plurality of pieces of spatial relation information configured by the network device for the target PUCCH resource.

A correspondence between the plurality of pieces of spatial relation information and the repetitions on the plurality of slots or the plurality of OFDM symbols may be agreed in advance between the network device and the user equipment; or the correspondence between the plurality of pieces of spatial relation information and the repetitions on the plurality of slots or the plurality of OFDM symbols is configured by the network device through the high layer signaling for the user equipment.

Specifically, the user equipment receives N pieces of spatial relation information configured by the network devices for the target PUCCH resource through a MAC layer signaling, and the N pieces of spatial relation information are respectively applied to repetitions of the target PUCCH resource on N slots or N OFDM symbols.

For example, assuming that the number of the plurality of pieces of spatial relation information is K, and the number of the plurality of slots or OFDM symbols is N (N=1,2,4,8 can be configured by the network device). At least one of the following agreed mapping relationships can be used:

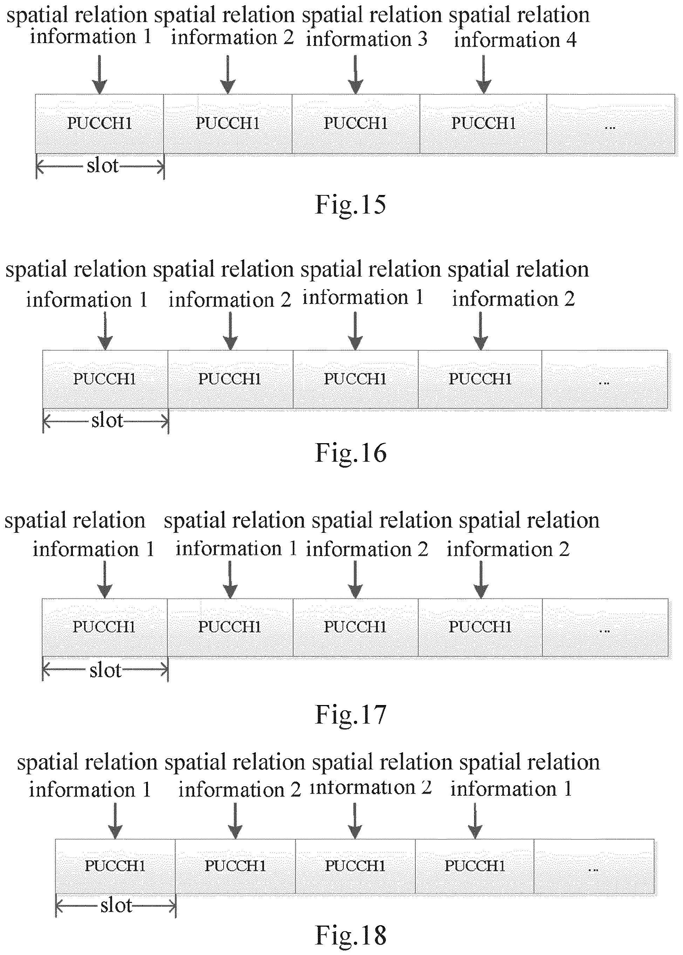

Referring to FIG. 15, which is a schematic diagram of a first mapping relationship, there is a one-to-one correspondence between the spatial relation information and repetitions on slots (K=N, for example, 4). There is a one-to-one correspondence between the plurality of pieces of spatial relation information and the repetitions on the plurality of slots or OFDM symbols, that is, the k-th spatial relation information of the plurality of pieces of spatial relation information corresponds to the repetition on the k-th slot or OFDM symbol of the plurality of slots or OFDM symbols. In this case, K and N need to satisfy K=N.

If K>N, only the first N pieces of spatial relation information of the K pieces of spatial relation information may be used as the spatial relation information corresponding to the repetitions on the N slots or OFDM symbols. In this case, there is a one-to-one mapping relationship between the N pieces of spatial relation information and the repetitions on the N slots or OFDM symbols

Referring to FIG. 16, which is a schematic diagram of a second mapping relationship, it is a cyclic correspondence between the spatial relation information and the repetition on the slot (for example, K=2, N=4). If N>K, the repetition on the n-th slot or OFDM symbol may correspond to the k-th spatial relation information in the plurality of pieces of spatial relation information, where k=[(n-1)mod K +1]. That is, the plurality of pieces of spatial relation information can poll the corresponding repetitions on the plurality of slots or OFDM symbols. For example, N=4, K=2, and the indexes of the spatial relation information corresponding to the repetition on the N slots or OFDM symbols among the plurality of pieces of spatial relation information may be {0,1,0,1}, as shown in FIG. 16; when N=8 and K=4, the indexes of the spatial relation information corresponding to the repetition on the N slots or OFDM symbols can be {0,1,2,3,0,1,2,3}. An advantage of such correspondence is that circulation can be first performed between a plurality of pieces of spatial relation information to obtain multi-beam or multi-panel diversity gain, so that the network device can quickly and correctly detect the UCI on the slot or OFDM symbol.

Referring to FIG. 17, which is a schematic diagram of a third mapping relationship, it is a continuous correspondence between the spatial relation information and the repetition on the slot (for example, K=2, N=4). If N=m*K (m>1), the repetition on the n-th slot or OFDM symbol may correspond to the k-th spatial relation information of the plurality of pieces of spatial relation information, where k=[n/m] (CEIL), that is, one piece of spatial relation information can correspond to the repetitions on the plurality of consecutive slots or OFDM symbols. For example, N=4, K=2, then the indexes of the spatial relation information corresponding to N slots or OFDM symbols can be {0,0,1,1}, as shown in FIG. 17; when N=8, K=2 , the index of the spatial relation information corresponding to the N slots or OFDM symbols among the plurality of pieces of spatial relation information may be {0,0,0,0,1,1,1,1}. The advantage of such correspondence is that when different spatial relation information corresponds to different beams, the beam switching of the user equipment can be reduced, and the complexity is reduced.

Referring to FIG. 18, which is a schematic diagram of a fourth mapping relationship, it is a mixed correspondence between the spatial relation information and the repetitions on slots (for example, K=2, N=4). In addition, a compromise can be made between the above two methods, which considers the diversity gain and the beam switching frequency of the user equipment at the same time. For example, N=4, K=2, then the indexes of the spatial relation information corresponding to the repetitions on the N slots or OFDM symbols can be {0,1,1,0}, as shown in FIG. 18; when N=8, K =2, the index of the spatial relation information corresponding to the repetitions on the N slots or OFDM symbols may be {0,0,1,1,1,1,0,0}.

Optionally, the network device may also configure the index sequence of the spatial relation information corresponding to the repetitions on the plurality of slots or OFDM symbols through the high layer signaling (such as RRC or MAC signaling) in advance; and the user equipment determines the spatial relation information corresponding to the repetition on each slot or OFDM symbol based on the index sequence. The index in the index sequence is the index of the spatial relation information corresponding to the repetition on each slot or OFDM symbol among the plurality of pieces of spatial relation information.

For example, assuming that the number of the plurality of pieces of spatial relation information is K=2, and the number of the plurality of slots or OFDM symbols is N (N=1,2,4,8 can be configured by the network device), then the length of the index sequence is K, for example, it can be {0,0} or {0,1} or {1,0}, and the network device configures which index sequence to use through the high layer signaling. For example, the index of the spatial relation information corresponding to the repetition on the n-th slot or the OFDM symbol in the N slots or OFDM symbols among the plurality of pieces of spatial relation information is (k=mod(n -1, K)+1)th index value.

For example, the network device may directly configure the index sequence of the spatial relation information corresponding to the repetitions on the N slots or OFDM symbols through the RRC signaling, that is, the length of the index sequence may be N. For example, assuming that N=4 and K=2, the index sequence can be {0,1,0,1} or {0,0,1,1} or {0,0,0,0}, and the network device informs the user equipment of the index sequence for use in the current transmission. For example, the index of the spatial relation information corresponding to the repetition on the n-th slot or the n-th OFDM symbol in the n slots or OFDM symbols among the plurality of pieces of spatial relation information is the n-th index value in the index sequence.

Optionally, the user equipment receives N pieces of spatial relation information configured by the network devices for the target PUCCH resource through a MAC layer signaling, and the N pieces of spatial relation information are respectively applied to repetitions of the PUCCH resource on N slots or N OFDM symbols. In this case, the network device configures one piece of spatial relation information for the repetition on each slot or OFDM symbol, respectively.

Specifically, the plurality of slots are continuous slots, and the plurality of OFDM symbols are continuous OFDM symbols.

At this time, the step of transmitting the DCI on the plurality of PUCCH resources specifically includes: repeatedly transmitting the UCI on the plurality of slots or OFDM symbols according to the spatial relation information corresponding to the respective repetitions on the plurality of slots or the plurality of OFDM symbols. More specifically, after the spatial relation information corresponding to the respective repetition on each slot or OFDM symbol, the beam used for the repetition on the slot or OFDM symbol is determined based on the spatial relation information corresponding to the repetition on each slot or OFDM symbol. The UCI is transmitted on the target PUCCH resource on the slot or OFDM symbol based on the beam.

Optionally, the step of determining that the repetition of the target PUCCH resource on the plurality of slots or OFDM symbols is the plurality of PUCCH resources for transmitting the same uplink control information (UCI) specifically includes:

determining the target PUCCH resource and/or the number of repetitions of the target PUCCH resource through the first message of the network device.

Optionally, if the UCI is HARQ-ACK information, the first message is the DCI for scheduling a PDSCH corresponding to the HARQ-ACK information, that is, the HARQ-ACK information is used to indicate whether the PDSCH is correctly transmitted. For example, the user equipment determines the target PUCCH resource according to PUCCH resource indication information in the DCI. Alternatively, the number of repetitions of the target PUCCH resource may be indicated in the DCI.

Optionally, if the UCI is a CSI report, the first message is the RRC signaling for configuring the PUCCH parameter set (for example, the RRC parameter PUCCH-config), and the RRC signaling for configuring the CSI report (for example, CSI-ReportConfig) or the MAC signaling for activating the CSI report. For example, if the CSI report is a periodic CSI report, the target PUCCH resource may be indicated by the RRC signaling that configures the CSI report resource. For another example, the number of repetitions may be configured by configuring the number of slots or the number of OFDM symbols in the PUCCH parameter set of the target PUCCH resource. Alternatively, if the CSI report is a quasi-persistent CSI report, the target PUCCH resource and/or the number of repetitions may be indicated by the MAC layer signaling that triggers the quasi-persistent CSI report. Or, no matter what kind of UCI, the number of repetitions is indicated by configuring the RRC signaling (for example, the RRC parameter field PUCCH-config) of the PUCCH parameter set used for UCI transmission.

Fifth Specific Embodiment

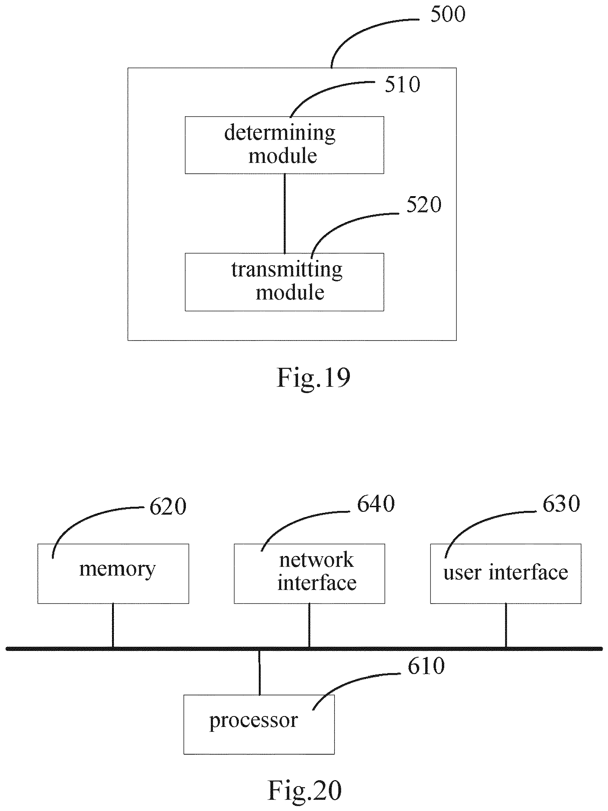

Referring to FIG. 19, which is a schematic diagram of modules of a user equipment according to the fifth embodiment of the present disclosure, the user equipment 500 includes the following.

A determining module 510, configured to determine a plurality of physical uplink control channel (PUCCH) resources for transmitting the same uplink control information (UCI).

Specifically, for each PUCCH resource of the plurality of PUCCH resources, at least one of the following parameters is the same: a starting PRB (for example, using the RRC parameter starting PRB), an intra-slot frequency hopping configuration (for example, using the RRC parameter intraSlotFrequencyHopping), a PUCCH format (for example, using RRC parameter format), a starting OFDM symbol (for example, using RRC parameter startingSymbolIndex), the number of occupied OFDM symbols (for example, using RRC parameter nrofSymbols), and a PUCCH resource set where the PUCCH resource is located. Further, when the UCI is CSI, the parameter may also include: a resource period (for example, using the RRC parameter reportSlotConfig), and a slot offset (for example, using the RRC parameter reportSlotConfig).

Preferably, the plurality of PUCCH resources occupy different time domain resources, for example, occupying different OFDM symbols or occupying different slots.

Optionally, the determining module 510 is configured to determine the plurality of PUCCH resources for transmitting the same uplink control information (UCI) according to a first message sent by a network device, wherein the first message is downlink control information (DCI) for scheduling a physical downlink shared channel (PDSCH) corresponding to the UCI or a high layer signaling for configuring transmission of the UCI. The number of the plurality of PUCCH resources may be indicated to the user equipment, and the plurality of PUCCH resources is determined according to the number of the plurality of PUCCH resources.

A transmitting module 520 is configured to transmit the UCI on the plurality of PUCCH resources.

Optionally, the network device configures a corresponding panel ID for each PUCCH resource. For example, it can be configured for each PUCCH resource through the RRC signaling (such as RRC parameter PUCCH-resource), or configured through the spatial relation information of MAC signaling on the PUCCH resource. Then, the determining module 510 determines the panel corresponding to the PUCCH resource according to the panel ID corresponding to each PUCCH resource, and the transmitting module 520 transmits the UCI on the PUCCH resource through the corresponding panel.

Optionally, the determining module 510 determines a beam used for transmission of the PUCCH resource according to the spatial relation information corresponding to each PUCCH resource, and uses the beam to transmit the UCI on the PUCCH resource. By using different beams to transmit the same UCI by the transmitting module 520, the effect of improving transmission reliability is obtained.

Optionally, the determining module 510 being configured to determine the plurality of PUCCH resources for transmitting the same uplink control information (UCI) according to the first message sent by the network device specifically is:

the determining module 510 is configured to determine the number of the plurality of PUCCH resources for transmitting the same uplink control information (UCI) according to the first message sent by the network device

Optionally, if the UCI is HARQ-ACK information, the determining module 510 uses the DCI for scheduling a PDSCH corresponding to the HARQ-ACK information as the first message, that is, the HARQ-ACK information is used to indicate whether the PDSCH is correctly transmitted. For example, the number of the plurality of PUCCH resources may be directly indicated in the DCI.

Optionally, if the UCI is a CSI report, the determining module 510 uses the RRC signaling for configuring a PUCCH parameter set used for UCI transmission (for example, the RRC parameter field PUCCH-config), and the RRC signaling for configuring the CSI report (for example, RRC parameter field CSI-ReportConfig) or the MAC signaling for activating the CSI report as the first message. For example, if the CSI report is a periodic CSI report, the number may be indicated by the RRC signaling (for example, the RRC parameter field CSI-ReportConfig) that configures the CSI report resource. Alternatively, if the CSI report is a quasi-persistent CSI report, the number may be indicated by the MAC layer signaling that triggers the quasi-persistent CSI report. Or, no matter what kind of UCI, the number is indicated by configuring the RRC signaling (for example, the RRC parameter field PUCCH-config) of the PUCCH parameter set used for UCI transmission.

The number of the plurality of PUCCH resources that transmit the same UCI may also be expressed as the number of repetitions of one UCI or the number of PUCCH repetitions.

Further, after the number of the plurality of PUCCH resources is determined according to the first message, the plurality of PUCCH resources may be further determined according to the number. Specifically, the following several manners may be referred to.

Specifically, when the determining module 510 is configured to determine the number of the plurality of PUCCH resources for transmitting the same uplink control information (UCI) according to the first message sent by the network device, the determining module 510 is specifically configured to perform the following.

Optional manner one: please refer to FIG. 8, the first message contains a plurality of pieces of PUCCH resource indication information, and the determining module 510 determines at least one PUCCH resource of the plurality of PUCCH resources, respectively according to each of at least two pieces of indication information. Preferably, the first message contains a plurality of pieces of PUCCH resource indication information, and the determining module 510 determines at least one PUCCH resource of the plurality of PUCCH resources, respectively according to each piece of indication information. The following is a description with a less preferred solution, but it does not limit this specific embodiment.

In an embodiment, the quantity of the PUCCH resource indication information is the number of the plurality of PUCCH resources that transmit the same UCI, which can be determined in the foregoing manner.

For example, if the UCI is the HARQ-ACK information, the DCI for scheduling the PDSCH corresponding to the HARQ-ACK information may include N pieces of PUCCH resource indication information, and the determining module 510 determines one PUCCH resource according to at least two pieces of indication information, respectively, thereby obtaining N PUCCH resources. Preferably, a length of each piece of PUCCH resource indication information is 3 bits.

For example, if the UCI is the CSI report, the RRC signaling for configuring the CSI report may include N pieces of PUCCH resource indication information, and the determining module 510 determines one periodic PUCCH resource according to each piece of indication information, thereby obtaining the N PUCCH resources.

Optional manner 2: the first message contains one piece of PUCCH resource indication information, the determining module 510 determines the plurality of PUCCH resources according to the PUCCH resource indication information and at least one of PUCCH resource sets or PUCCH parameter sets pre-configured by the network device.

Please referring to FIG. 9, which is a schematic diagram of a PUCCH resource indication method. Optionally, the user equipment receives the plurality of PUCCH resource sets (PUCCH Resource Set) pre-configured by the network device through the high layer signaling, and the plurality of PUCCH resource sets include at least one PUCCH resource (PUCCH Resource), and these resources may adopt the same PUCCH format. The determining module 510 may determine one PUCCH resource from at least two PUCCH resource sets of the plurality of PUCCH resource sets, respectively, according to the PUCCH resource indication information, so as to obtain the plurality of PUCCH resources. For example, the determining module 510 may obtain the first PUCCH resource in the plurality of PUCCH resources according to the PUCCH resource indication information and the first PUCCH resource set in the plurality of PUCCH resource sets, and obtain the second PUCCH resource in the plurality of PUCCH resources according to the PUCCH resource indication information and the second PUCCH resource set in the plurality of PUCCH resource sets, and so on.

Please referring to FIG. 10, which is a schematic diagram of another PUCCH resource indication method. Optionally, the user equipment receives the plurality of PUCCH parameter sets (PUCCH-config) pre-configured by the network device through the high layer signaling, and the determining module 510 determines one PUCCH resource according to the PUCCH resource indication information and at least two PUCCH parameter sets of the plurality of PUCCH parameter sets, respectively, so as to obtain the plurality of PUCCH resources. Specifically, the determining module 510 may obtain the first PUCCH resource in the plurality of PUCCH resources according to the PUCCH resource indication information and the first PUCCH parameter set of the plurality of PUCCH parameter sets, and obtain the second PUCCH resource in the plurality of PUCCH resources according to the PUCCH resource indication information and the second PUCCH parameter set of the plurality of PUCCH parameter sets, and so on. For example, the PUCCH parameter set includes the configuration of the PUCCH resource set, and the determining module 510 may determine the plurality of PUCCH resources according to the PUCCH resource indication information and the PUCCH resource set configuration in the plurality of PUCCH resource sets.

Specifically, if the PUCCH carries the HARQ-ACK information, the determining module 510 may determine the PUCCH resource according to the PUCCH resource indication information and a CCE index used for scheduling the PDSCH corresponding to the HARQ-ACK information.

Specifically, one PUCCH resource set may include 8 or 32 PUCCH resources.

In an implementation of this specific embodiment, the number of the at least one PUCCH resource set or PUCCH parameter set is the number of the plurality of PUCCH resources that transmit the same UCI, which can be determined by the foregoing method.

Optional manner 3, the determining module 510 determines the first PUCCH resource of the plurality of PUCCH resources according to the PUCCH resource indication information in the first message, and then determines other PUCCH resources according to the first PUCCH resource. The steps of determining other PUCCHs by the determining module 510 may specifically be the following.

Optionally, the determining module 510 obtains resource indexes of other PUCCH resources according to the resource index of the first PUCCH resource, and obtains other PUCCHs from the PUCCH resource set to which the first PUCCH resource belongs according to the resource indexes of other PUCCH resources. Specifically, the determining module 510 determines that the resource index of the first PUCCH resource is $r_{PUCCH}=k$ according to the PUCCH resource indication information, and the resource indexes of the other m PUCCH resources of the plurality of PUCCH resources may be obtained according to k, respectively, for example, {k+1, k+2,...,k+m} mod R, where R is the number of PUCCH resources included in the PUCCH resource set to which the first PUCCH resource belongs. The resource index is an index of a PUCCH resource in the PUCCH resource set where it is located. The resource index is used to determine the frequency domain resource and sequence resource of the PUCCH.

Optionally, the other PUCCH resources are PUCCH resources that occupy the same frequency domain resource and/or sequence resource as the first PUCCH resource, and an OFDM symbol where the other PUCCH resources are located is behind an OFDM symbol where the first PUCCH resource is located. That is, the other PUCCH resources are PUCCH resources that occupy the same frequency domain resource and/or sequence resource as the first PUCCH resource, and an OFDM symbol where the other PUCCH resources are located is behind an OFDM symbol where the first PUCCH resource is located. For example, if the index of the OFDM symbol where the first PUCCH resource is located is n, then the OFDM symbols where the other m PUCCH resources of the plurality of PUCCH resources are located are {n+1, n+2,..., n +m}, and the frequency domain resources (for example, starting PRB position) and sequence resources (for example, cyclic shift) of the m PUCCH resources are same as those of the first PUCCH resource. Since the frequency domain resource and the sequence resource are determined according to the resource index, this manner can also be described as: the resource indexes of the other m PUCCH resources of the plurality of PUCCH resources are same as that of the first PUCCH resource, but occupied OFDM symbols are different.

Optionally, the other PUCCH resources are PUCCH resources that have the same resource index as the first PUCCH resource in at least one PUCCH resource set other than a PUCCH resource set where the first PUCCH resource is located.

Specifically, the network device configures the plurality of PUCCH resource sets for the user equipment in advance, and the first PUCCH resource set contains the first PUCCH resource, and the resource index of the first PUCCH resource is $r_{PUCCH}=k$. Then the determining module 510 determines the m PUCCH resources with resource index k among the other m PUCCH resource sets except the first PUCCH resource set among the plurality of PUCCH resource sets as the other PUCCH resources of the plurality of PUCCH resources.

In this optional third manner, the UCI transmitted by different PUCCH resource sets is the same (that is, other PUCCH resource sets are the repetitions of the first PUCCH resource set), and different PUCCH resource sets may correspond to the panels of different user equipment, or correspond to different receiving TRPs, thereby supporting the repeated transmission of PUCCH through the plurality of panels or the plurality of TRPs, and improving the reliability of PUCCH transmission.

In an implementation of this manner, the number of other PUCCH resources is determined according to the number of the plurality of PUCCH resources that transmit the same UCI, for example, the number of the plurality of PUCCH resources minus 1. The number of the plurality of PUCCH resources can be determined by the aforementioned method.

Optional manner 4, the determining module 510 determines a plurality of indicator values corresponding to an indicator value according to the indicator value of the PUCCH resource indication information, and determines the plurality of PUCCH resources according to the plurality of indicator values.

Referring to FIG. 14, which is a schematic diagram of another PUCCH resource indication method. Optionally, the determining module 510 obtains the corresponding plurality of indicator values according to the indicator value of the PUCCH resource indication information, and determines at least one PUCCH resource respectively according to at least two indicator values of the plurality of indicator values, thereby determining the plurality of PUCCH resources. Specifically, assuming that the indicator value of the PUCCH resource indication information is k, the determining module 510 can obtain m corresponding indicator values according to the indicator value, for example {k, k+1,..., k+m-1} mod 8, and then obtain m PUCCH resources respectively according to the m indication values.

Specifically, in a case where the determining module 510 is configured to determine the plurality of PUCCH resources for transmitting the same uplink control information (UCI), the plurality of PUCCH resources are repetitions of a target PUCCH resource on a plurality of slots or a plurality of OFDM symbols.

Further, the determining module 510 is further specifically configured to determine spatial relation information corresponding to the respective repetitions on the plurality of slots or the plurality of OFDM symbols according to a plurality of pieces of spatial relation information configured by the network device for the target PUCCH resource. A correspondence between the plurality of pieces of spatial relation information and the repetitions on the plurality of slots or the plurality of OFDM symbols may be agreed in advance between the network device and the user equipment; or the correspondence between the plurality of pieces of spatial relation information and the repetitions on the plurality of slots or the plurality of OFDM symbols is configured by the network device through the high layer signaling for the user equipment.

More specifically, the determining module 510 is specifically configured to receive N pieces of spatial relation information configured by the network devices for the target PUCCH resource through a MAC layer signaling, and the N pieces of spatial relation information are respectively applied to repetitions of the target PUCCH resource on N slots or N OFDM symbols.

For example, assuming that the number of the plurality of pieces of spatial relation information is K, and the number of the plurality of slots or OFDM symbols is N (N=1,2,4,8 can be configured by the network device). At least one of the following agreed mapping relationships can be used:
Referring to FIG. 15, which is a schematic diagram of a first mapping relationship, there is a one-to-one correspondence between the spatial relation information and repetitions on slots (K=N, for example, 4). There is a one-to-one correspondence between the plurality of pieces of spatial relation information and the repetitions on the plurality of slots or OFDM symbols, that is, the k-th spatial relation information of the plurality of pieces of spatial relation information corresponds to the repetition on the k-th slot or OFDM symbol of the plurality of slots or OFDM symbols. In this case, K and N need to satisfy K=N.

If K>N, only the first N pieces of spatial relation information of the K pieces of spatial relation information may be used as the spatial relation information corresponding to the repetitions on the N slots or OFDM symbols. In this case, there is a one-to-one mapping relationship between the N pieces of spatial relation information and the repetitions on the N slots or OFDM symbols
Referring to FIG. 16, which is a schematic diagram of a second mapping relationship, it is a cyclic correspondence between the spatial relation information and the repetition on the slot (for example, K=2, N=4). If N>K, the repetition on the n-th slot or OFDM symbol may correspond to the k-th spatial relation information in the plurality of pieces of spatial relation information, where k=[(n-1)mod K +1]. That is, the plurality of pieces of spatial relation information can poll the corresponding repetitions on the plurality of slots or OFDM symbols. For example, N=4, K=2, and the indexes of the spatial relation information corresponding to the repetition on the N slots or OFDM symbols among the plurality of pieces of spatial relation information may be {0,1,0,1}, as shown in FIG. 16; when N=8 and K=4, the indexes of the spatial relation information corresponding to the repetition on the N slots or OFDM symbols can be {0,1,2,3,0,1,2,3}. An advantage of such correspondence is that circulation can be first performed between a plurality of pieces of spatial relation information to obtain multi-beam or multi-panel diversity gain, so that the network device can quickly and correctly detect the UCI on the slot or OFDM symbol.

Referring to FIG. 17, which is a schematic diagram of a third mapping relationship, it is a continuous correspondence between the spatial relation information and the repetition on the slot (for example, K=2, N=4). If N=m*K (m>1), the repetition on the n-th slot or OFDM symbol may correspond to the k-th spatial relation information of the plurality of pieces of spatial relation information, where k=[n/m] (CEIL), that is, one piece of spatial relation information can correspond to the repetitions on the plurality of consecutive slots or OFDM symbols. For example, N=4, K=2, then the indexes of the spatial relation information corresponding to N slots or OFDM symbols can be {0,0,1,1}, as shown in FIG.17; when N=8, K=2 , the index of the spatial relation information corresponding to the N slots or OFDM symbols among the plurality of pieces of spatial relation information may be {0,0,0,0,1,1,1,1}. The advantage of such correspondence is that when different spatial relation information corresponds to different beams, the beam switching of the user equipment can be reduced, and the complexity is reduced.

Referring to FIG. 18, which is a schematic diagram of a fourth mapping relationship, it is a mixed correspondence between the spatial relation information and the repetitions on slots (for example, K=2, N=4). In addition, a compromise can be made between the above two methods, which considers the diversity gain and the beam switching frequency of the user equipment at the same time. For example, N=4, K=2, then the indexes of the spatial relation information corresponding to the repetitions on the N slots or OFDM symbols can be {0,1,1,0}, as shown in FIG. 18; when N=8, K =2, the index of the spatial relation information corresponding to the repetitions on the N slots or OFDM symbols may be {0,0,1,1,1,1,0,0}.

Optionally, the network device may also configure the index sequence of the spatial relation information corresponding to the repetitions on the plurality of slots or OFDM symbols through the high layer signaling (such as RRC or MAC signaling) in advance; and the determining module 510 determines the spatial relation information corresponding to the repetition on each slot or OFDM symbol based on the index sequence. The index in the index sequence is the index of the spatial relation information corresponding to the repetition on each slot or OFDM symbol among the plurality of pieces of spatial relation information.

For example, assuming that the number of the plurality of pieces of spatial relation information is K=2, and the number of the plurality of slots or OFDM symbols is N (N=1,2,4,8 can be configured by the network device), then the length of the index sequence is K, for example, it can be {0,0} or {0,1} or {1,0}, and the network device configures which index sequence to use through the high layer signaling. For example, the index of the spatial relation information corresponding to the repetition on the n-th slot or the OFDM symbol in the N slots or OFDM symbols among the plurality of pieces of spatial relation information is (k=mod(n -1, K)+1)th index value.

For another example, the determining module 510 may directly configure the index sequence of the spatial relation information corresponding to the repetitions on the N slots or OFDM symbols through the RRC signaling, that is, the length of the index sequence may be N. For example, assuming that N=4 and K=2, the index sequence can be {0,1,0,1} or {0,0,1,1} or {0,0,0,0}, and the network device informs the user equipment of the index sequence for use in the current transmission. For example, the index of the spatial relation information corresponding to the repetition on the n-th slot or the n-th OFDM symbol in the n slots or OFDM symbols among the plurality of pieces of spatial relation information is the n-th index value in the index sequence.

Optionally, the determining module 510 receives N pieces of spatial relation information configured by the network devices for the target PUCCH resource through a MAC layer signaling, and the N pieces of spatial relation information are respectively applied to repetitions of the PUCCH resource on N slots or N OFDM symbols. In this case, the determining module 510 configures one piece of spatial relation information for the repetition on each slot or OFDM symbol, respectively.

Specifically, the plurality of slots are continuous slots, and the plurality of OFDM symbols are continuous OFDM symbols.

In this case, the transmitting module 520 is specifically configured to repeatedly transmit the UCI on the plurality of slots or OFDM symbols according to the spatial relation information corresponding to the respective repetitions on the plurality of slots or the plurality of OFDM symbols.

Optionally, the determining module 510 being configured to determine that the repetition of the target PUCCH resource on the plurality of slots or OFDM symbols is the plurality of PUCCH resources for transmitting the same uplink control information (UCI) specifically includes the following.

The determining module 510 is specifically configured to determine the target PUCCH resource and/or the number of repetitions of the target PUCCH resource through the first message of the network device.

The transmitting module 520 is specifically configured to repeatedly transmit the UCI on the target PUCCH resource in the plurality of slots or OFDM symbols.

Specifically, the determining module 510 repeatedly transmits the UCI on the plurality of slots or OFDM symbols according to the spatial relation information corresponding to the respective repetitions on the plurality of slots or the plurality of OFDM symbols. More specifically, after determining the spatial relation information corresponding to the respective repetitions on each slot or OFDM symbol, the determining module 510 determines the beam used for the repetition on the slot or OFDM symbol based on the spatial relation information corresponding to the repetition on each slot or OFDM symbol, and transmits the UCI on the target PUCCH resource on the slot or OFDM symbol based on the beam.

Specifically, the determining module 510 may include one of the following two optional ways to confirm the number of repetitions of the target PUCCH resource:

Optionally, if the UCI is HARQ-ACK information, the first message is the DCI for scheduling a PDSCH corresponding to the HARQ-ACK information, that is, the HARQ-ACK information is used to indicate whether the PDSCH is correctly transmitted. For example, the determining module 510 determines the target PUCCH resource according to PUCCH resource indication information in the DCI. Alternatively, the number of repetitions of the target PUCCH resource may be indicated in the DCI.

Optionally, if the UCI is a CSI report, the first message is the RRC signaling for configuring the PUCCH parameter set (for example, the RRC parameter PUCCH-config), and the RRC signaling for configuring the CSI report (for example, CSI-ReportConfig) or the MAC signaling for activating the CSI report. For example, if the CSI report is a periodic CSI report, the target PUCCH resource may be indicated by the RRC signaling that configures the CSI report resource. For another example, the number of repetitions may be configured by configuring the number of slots or the number of OFDM symbols in the PUCCH parameter set of the target PUCCH resource. Alternatively, if the CSI report is a quasi-persistent CSI report, the target PUCCH resource and/or the number of repetitions may be indicated by the MAC layer signaling that triggers the quasi-persistent CSI report. Or, no matter what kind of UCI, the number of repetitions is indicated by configuring the RRC signaling (for example, the RRC parameter field PUCCH-config) of the PUCCH parameter set used for UCI transmission.

Further, the determining module 510 is further configured to determine spatial relation information corresponding to the respective repetitions on the plurality of slots or the plurality of OFDM symbols according to the plurality of pieces of spatial relation information configured by the network device for the target PUCCH resource.

Optionally, the correspondence between the plurality of pieces of spatial relation information and the repetitions on the plurality of slots or the plurality of OFDM symbols may be agreed in advance between the network device and the user equipment; or the correspondence between the plurality of pieces of spatial relation information and the repetitions on the plurality of slots or the plurality of OFDM symbols is configured by the network device through the high layer signaling for the user equipment.

Specifically, the repetition on each of the plurality of slots corresponds to one piece of spatial relation information of the plurality of pieces of spatial relation information, or the repetition on the OFDM symbols of the plurality of OFDM symbols corresponds to one piece of spatial relation information of the plurality of pieces of spatial relation information.

Sixth Specific embodiment

Please refer to FIG. 20, which is a schematic diagram of a hardware structure of a user equipment according to the sixth embodiment of the present disclosure. The user equipment 600 includes a processor 610, a memory 620, a user interface 630, and a network interface 640. The above-mentioned components of the user equipment realize the communication connection between each other through the bus system.

The user interface 630 may be a hardware device that can interact with the user by a display or a pointing device (touch panel or touch screen, etc.). The operating system and application programs are stored in the memory 620.

After the processor 610 receives the first message sent by the network device through the network structure 640, it reads the operating system and/or application program stored in the memory 620, executes the steps in the fourth embodiment above. After determining the plurality of PUCCH resources for transmitting the same uplink control information (UCI), the processor 610 transmits the same UCI on the plurality of PUCCH resources through the network interface 640, thereby realizing multi-beam transmission of UCI.

The processor 610 may also be an independent component, or may be a collective name for a plurality of processing elements. For example, it may be a CPU, an ASIC, or one or more integrated circuits configured to implement the above methods, such as at least one microprocessor DSP, or at least one programmable gate array FPGA.

The above-mentioned specific embodiments of the present disclosure provide a method and device for how the user equipment determines the plurality of PUCCH resources through the first message sent by the network device, and how to determine the spatial relation information corresponding to each repetition when performing the PUCCH repetition. In this way, it not only can support to flexibly transmitting the same UCI on plurality of PUCCH resources in a repeated manner, but also can support to use different beams on different panels for the repetition of PUCCH, or use different beams to transmit repeated PUCCHs for different receiving TRPs/panels, thereby obtaining greater diversity gain and improving the transmission reliability of PUCCH. At the same time, the manner in which the plurality of PUCCH resources are associated with each other can further reduce the signaling overhead for indicating the plurality of PUCCH resources.

The present disclosure is described with reference to implementation flowcharts and/or block diagrams of the method, device (system) and computer program product according to the embodiments of the present disclosure. It is to be understood that each flow and/or block in the flowcharts and/or the block diagrams and combinations of the flows and/or blocks in the implementation flowcharts and/or the block diagrams may be implemented by computer program instructions. These computer program instructions may be provided for a universal computer, a dedicated computer, an embedded processor or a processor of another programmable data processing device to generate a machine, so as to generate a device for realizing a function specified in one flow or multiple flows in the implementation flowcharts and/or one block or multiple blocks in the block diagrams through the instructions executed through the computer or the processor of another programmable data processing device. The program may be stored in a computer-readable storage medium, and the storage medium may include: a read only memory (ROM), a random access memory (RAM), a magnetic disk, or an optical disk.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

**Claims**

1. An uplink control channel transmission method, applied to a user equipment, and comprising:

   determining a plurality of physical uplink control channel (PUCCH) resources for transmitting the same uplink control information (UCI); and
   transmitting the UCI on the plurality of PUCCH resources.

2. The method according to claim 1, wherein step of determining the plurality of physical uplink control channel (PUCCH) resources for transmitting the same uplink control information (UCI) specifically comprises:
   determining the plurality of PUCCH resources according to a first message sent by a network device, wherein the first message is downlink control information (DCI) for scheduling a physical downlink shared channel (PDSCH) corresponding to the UCI or a high layer signaling for configuring transmission of the UCI.

3. The method according to claim 2, wherein:

   when the UCI is HARQ-ACK information, the first message is DCI for scheduling a PDSCH corresponding to the HARQ-ACK information; or
   when the UCI is CSI, the first message is a RRC signaling for configuring a PUCCH parameter set used for CSI transmission.

4. The method according to any one of claims 2-3, wherein step of determining the plurality of PUCCH resources according to the first message sent by the network device specifically comprises:

   determining at least one PUCCH resource of the plurality of PUCCH resources, according to each of at least two pieces of indication information of a plurality of pieces of PUCCH resource indication information comprised in the first message, respectively; or
   determining the plurality of PUCCH resources according to the PUCCH resource indication information comprised in the first message and a plurality of PUCCH resource sets or PUCCH parameter sets configured by the network device in advance; or
   determining a first PUCCH resource of the plurality of PUCCH resources according to the PUCCH resource indication information in the first message, and determining other PUCCH resources of the plurality of PUCCH resources according to the first PUCCH resource;
   or,
   determining, according to an indicator value of the PUCCH resource indication information comprised in the first message, a plurality of indicator values corresponding to the indicator value, and determining at least one PUCCH resource according to at least two indicator values of the plurality of indicator values, respectively.

5. The method according to claim 4, wherein the determining the plurality of PUCCH resources according to the PUCCH resource indication information comprised in the first message and the plurality of PUCCH resource sets or PUCCH parameter sets configured by the network device in advance comprises:

   determining one PUCCH resource respectively from at least two PUCCH resource sets of the plurality of PUCCH resource sets configured by the network device through the high layer signaling according to the PUCCH resource indication information to obtain the plurality of PUCCH resources; or
   determining one PUCCH resource respectively according to the PUCCH resource indication information and at least two PUCCH parameter sets of the plurality of PUCCH parameter sets configured by the network device through the high layer signaling to obtain the plurality of PUCCH resources.

6. The method according to claim 4, wherein step of determining the other PUCCH resources of the plurality of PUCCH resources according to the first PUCCH resource specifically comprises:

obtaining resource indexes of the other PUCCH resources according to a resource index of the first PUCCH resource, and obtaining the other PUCCH resources according to the resource indexes of the other PUCCH resources from a PUCCH resource set to which the first PUCCH resource belongs; or
determining that the other PUCCH resources are PUCCH resources allocated with the same frequency domain resource and/or sequence resource as the first PUCCH resource, and OFDM symbols where the other PUCCH resources are located are behind an OFDM symbol where the first PUCCH resource is located; or
determining that the other PUCCH resources are PUCCH resources that have the same resource index as the first PUCCH resource in at least one PUCCH resource set other than a PUCCH resource set where the first PUCCH resource is located.

7. The method according to any one of claims 1-3, wherein the plurality of PUCCH resources are repetitions of a target PUCCH resource on a plurality of slots or a plurality of OFDM symbols.

8. The method according to claim 9, wherein the method further comprises:
determining spatial relation information corresponding to respective repetitions on the plurality of slots or the plurality of OFDM symbols according to a plurality of pieces of spatial relation information configured by the network device for the target PUCCH resource.

9. The method according to claim 8, wherein step of determining the spatial relation information corresponding to respective repetitions on the plurality of slots or the plurality of OFDM symbols according to the plurality of pieces of spatial relation information configured by the network device for the target PUCCH resource specifically comprises:

agreeing a correspondence between the plurality of pieces of spatial relation information and the repetitions on the plurality of slots or the plurality of OFDM symbols with the network device in advance; or
receiving the correspondence between the plurality of pieces of spatial relation information and the repetitions on the plurality of slots or the plurality of OFDM symbols configured by the network device through the high layer signaling.

10. The method according to claim 8 or 9, wherein step of determining the spatial relation information corresponding to respective repetitions on the plurality of slots or the plurality of OFDM symbols according to the plurality of pieces of spatial relation information configured by the network device for the target PUCCH resource specifically comprises:

receiving N pieces of spatial relation information configured by the network devices for the target PUCCH resource through a MAC layer signaling; and
applying the N pieces of spatial relation information to respective repetitions of the target PUCCH resource on N slots or OFDM symbols.

11. The method according to any one of claims 8 to 10, wherein step of transmitting the UCI on the plurality of PUCCH resources specifically comprises:
transmitting the UCI on the target PUCCH resource on the plurality of slots or the plurality of OFDM symbols repeatedly according to the spatial relation information corresponding to respective repetitions on the plurality of slots or the plurality of OFDM symbols.

12. The method according to any one of claims 8 to 11, wherein the plurality of slots are continuous slots, and the plurality of OFDM symbols are continuous OFDM symbols.

13. The method according to any one of claims 8 to 12, wherein for the plurality of PUCCH resources, at least one of the following parameters is the same: a starting physical resource block (PRB), a resource period, a slot offset, an intra-slot frequency hopping configuration, a PUCCH format, a starting OFDM symbol, the number of occupied OFDM symbols, and a PUCCH resource set where the PUCCH resource is located.

14. The method according to any one of claims 1-12, wherein the plurality of PUCCH resources are allocated with different time domain resources.

15. The method according to claim 1, wherein step of transmitting the UCI on the plurality of PUCCH resources comprises:

determining panels corresponding to at least two PUCCH resources according to antenna panel identifications (IDs) corresponding to the at least two PUCCH resources of the plurality of PUCCH resources; and
transmitting the UCI on each of the at least two PUCCH resources through antenna panels corresponding to the at least two PUCCH resources.

16. The method according to claim 1, wherein step of transmitting the UCI on the plurality of PUCCH resources further comprises:

determining a beam used for transmission of at least two PUCCH resources according to spatial relation information corresponding to the at least two PUCCH resources of the plurality of PUCCH resources; and
transmitting the UCI on a PUCCH resource of the at least two PUCCH resources by using the beam used for the transmission of the at least two PUCCH resources.

17. A user equipment, comprising:

a determining module, configured to determine a plurality of physical uplink control channel (PUCCH) resources for transmitting the same uplink control information (UCI); and
a transmitting module, configured to transmit the UCI on the plurality of PUCCH resources.

18. The user equipment according to claim 17, wherein the determining module is specifically configured to determine the number of the plurality of PUCCH resources according to a first message sent by a network device, wherein the first message is downlink control information (DCI) for scheduling a physical downlink shared channel (PDSCH) corresponding to the UCI or a high layer signaling for configuring transmission of the UCI.

19. The user equipment according to claim 18, wherein:

when the UCI is HARQ-ACK information, the first message is DCI for scheduling a PDSCH corresponding to the HARQ-ACK information; or
when the UCI is CSI, the first message is a RRC signaling for configuring a PUCCH parameter set used for UCI transmission.

20. The user equipment according to any one of claims 18-19, wherein:

the determining module is specifically configured to determine at least one PUCCH resource of the plurality of PUCCH resources according to at least two pieces of indication information of a plurality of pieces of PUCCH resource indication information comprised in the first message, respectively; or
the determining module is specifically configured to determine the plurality of PUCCH resources according to the PUCCH resource indication information comprised in the first message and a plurality of PUCCH resource sets or PUCCH parameter sets configured by the network device in advance; or
the determining module is specifically configured to determine a first PUCCH resource of the plurality of PUCCH resources according to the PUCCH resource indication information in the first message, and determine other PUCCH resources of the plurality of PUCCH resources according to the first PUCCH resource; or
the determining module is specifically configured to determine, according to an indicator value of the PUCCH resource indication information comprised in the first message, a plurality of indicator values corresponding to the indicator value, and determine at least one PUCCH resource according to at least two indicator values of the plurality of indicator values, respectively.

21. The user equipment according to claim 20, wherein when the determining module is specifically configured to determine the plurality of PUCCH resources according to the PUCCH resource indication information comprised in the first message and the plurality of PUCCH resource sets or PUCCH parameter sets configured by the network device in advance,

the determining module is specifically configured to receive the plurality of PUCCH resource sets configured by the network device in advance through the high layer signaling, and determine one PUCCH resource respectively from at least two PUCCH resource sets of the plurality of PUCCH resource sets according to the PUCCH resource indication information; or

the determining module is specifically configured to determine one PUCCH resource respectively according to the PUCCH resource indication information and at least two PUCCH parameter sets of the plurality of PUCCH parameter sets configured by the network device through the high layer signaling.

22. The user equipment according to claim 20, wherein when the determining module is specifically configured to determine the other PUCCH resources of the plurality of PUCCH resources according to the first PUCCH resource,

the determining module is specifically configured to obtain resource indexes of the other PUCCH resources according to a resource index of the first PUCCH resource, and obtain the other PUCCH resources according to the resource indexes of the other PUCCH resources from a PUCCH resource set to which the first PUCCH resource belongs; or

the determining module is specifically configured to determine that the other PUCCH resources are PUCCH resources allocated with the same frequency domain resource and/or sequence resource as the first PUCCH resource, and OFDM symbols where the other PUCCH resources are located are behind an OFDM symbol where the first PUCCH resource is located; or

the determining module is specifically configured to determine that the other PUCCH resources are PUCCH resources that have the same resource index as the first PUCCH resource in at least one PUCCH resource set other than a PUCCH resource set where the first PUCCH resource is located.

23. The user equipment according to any one of claims 17 to 19, wherein the determining module is specifically configured to determine repetitions of a target PUCCH resource on a plurality of slots or a plurality of OFDM symbols as the plurality of PUCCH resources for transmitting the same uplink control information (UCI).

24. The user equipment according to claim 23, wherein the determining module is specifically further configured to determine spatial relation information corresponding to respective repetitions on the plurality of slots or the plurality of OFDM symbols according to a plurality of pieces of spatial relation information configured by the network device for the target PUCCH resource.

25. The user equipment according to claim 24, wherein:

the determining module is specifically configured to agree a correspondence between the plurality of pieces of spatial relation information and the repetitions on the plurality of slots or the plurality of OFDM symbols with the network device in advance; or

the determining module is specifically configured to receive the correspondence between the plurality of pieces of spatial relation information and the repetitions on the plurality of slots or the plurality of OFDM symbols configured by the network device through the high layer signaling.

26. The user equipment according to claim 24 or 25, wherein:
the determining module is specifically configured to receive N pieces of spatial relation information configured by the network devices for the target PUCCH resource through a MAC layer signaling, and apply the N pieces of spatial relation information to respective repetitions of the PUCCH resource on N slots or OFDM symbols.

27. The user equipment according to any one of claims 24 to 26, wherein:
the transmitting module is specifically configured to transmit the UCI on the target PUCCH resource on the plurality of slots or the plurality of OFDM symbols repeatedly according to the spatial relation information corresponding to respective repetitions on the plurality of slots or the plurality of OFDM symbols.

28. The user equipment according to any one of claims 24 to 27, wherein the plurality of slots are continuous slots, and the plurality of OFDM symbols are continuous OFDM symbols.

29. The user equipment according to any one of claims 24 to 30, wherein for the plurality of PUCCH resources, at least one of the following parameters is the same: a starting physical resource block (PRB), a resource period, a slot offset, an intra-slot frequency hopping configuration, a PUCCH format, a starting OFDM symbol, the number of occupied OFDM symbols, and a PUCCH resource set where the PUCCH resource is located.

30. The user equipment according to any one of claims 17 to 30, wherein the plurality of PUCCH resources are allocated with different time domain resources.

31. The user equipment according to claim 17, wherein:

the determining module is specifically configured to determine a panel corresponding to each of at least two PUCCH resources according to antenna panel identifications (IDs) corresponding to the at least two PUCCH resources of the plurality of PUCCH resources; and

the transmitting module is specifically configured to transmit the UCI on each of the at least two PUCCH resources through antenna panels corresponding to the at least two PUCCH resources.

32. The user equipment according to claim 17, wherein:

the determining module is specifically configured to determine a beam used for transmission of at least two PUCCH resources according to spatial relation information corresponding to the at least two PUCCH resources of the plurality of PUCCH resources; and

the transmitting module is specifically configured to transmit the UCI on each PUCCH resource of the at least two PUCCH resources by using the beam used for the transmission of the at least two PUCCH resources.

33. A user equipment, comprising: a processor and a memory, wherein:

the memory stores an uplink control channel transmission program that is capable of being run on the processor, and the processor, when executing the uplink control channel transmission program, implements the uplink control channel transmission method according to any one of claims 1 to 16.

34. A computer-readable storage medium having an uplink control channel transmission program stored thereon, wherein the uplink control channel transmission program, when executed by a processor, implements the uplink control channel transmission method according to any one of claims 1 to 16.

35. An uplink control channel transmission method, applied to a network device, and comprising:

determining a plurality of physical uplink control channel (PUCCH) resources for transmitting the same uplink control information (UCI);

generating and sending a first message to a user equipment, wherein the first message is used by the user equipment to determine the plurality of PUCCH resources, and wherein the first message is downlink control information (DCI) for scheduling a physical downlink shared channel (PDSCH) corresponding to the UCI or a high layer signaling for configuring transmission of the UCI; and

receiving the UCI transmitted by the user equipment on the plurality of PUCCH resources determined according to the first message.

36. The method according to claim 35, wherein:

when the UCI is HARQ-ACK information, the first message is DCI for scheduling a PDSCH corresponding to the HARQ-ACK information; and

when the UCI is channel state information (CSI), the first message is a radio resource control (RRC) signaling for configuring a PUCCH parameter set, a RRC signaling for configuring a CSI report or a MAC signaling for activating the CSI report.

37. The method according to claim 35, wherein the indicating the plurality of PUCCH resources to the user equipment specifically comprises:

the first message comprising a plurality of pieces of PUCCH resource indication information, and each of at least two pieces of indication information being used for indicating at least one PUCCH resource of the plurality of PUCCH resources, respectively; or

the first message comprising one piece of PUCCH resource indication information, so that the plurality of PUCCH resources are determined by the user equipment according to the PUCCH resource indication information comprised in the first message and a plurality of PUCCH resource sets or PUCCH parameter sets configured by the network device in advance; or

the PUCCH resource indication information comprised in the first message being used for indicating a first PUCCH resource, so that other PUCCH resources of the plurality of PUCCH resources are determined by the user equipment according to the first PUCCH resource; or

determining, by the user equipment according to an indicator value of the PUCCH resource indication information contained in the first message, a plurality of indicator values corresponding to the indicator value, and determining at least one PUCCH resource according to at least two indicator values of the plurality of indicator values, respectively.

38. The method according to claim 37, wherein the first message comprising one piece of PUCCH resource indication information, so that the plurality of PUCCH resources are determined by the user equipment according to the PUCCH resource indication information comprised in the first message and the plurality of PUCCH resource sets or PUCCH parameter sets configured by the network device in advance, specifically comprising:

determining one PUCCH resource respectively from at least two PUCCH resource sets of the plurality of PUCCH resource sets configured by the network device through the high layer signaling according to the PUCCH resource indication information to obtain the plurality of PUCCH resources; or
determining one PUCCH resource respectively according to the PUCCH resource indication information and at least two PUCCH parameter sets of the plurality of PUCCH parameter sets configured by the network device through the high layer signaling to obtain the plurality of PUCCH resources.

39. The method according to claim 35, wherein the plurality of PUCCH resources are repetitions of a target PUCCH resource on a plurality of slots or a plurality of OFDM symbols.

40. The method according to claim 39, further comprising:
configuring a plurality of pieces of spatial relation information for the target PUCCH resource, so that spatial relation information corresponding to respective repetitions on the plurality of slots or the plurality of OFDM symbols is determined by user equipment according to the plurality of pieces of spatial relation information.

41. The method according to claim 40, wherein a correspondence between the plurality of pieces of spatial relation information and the repetitions on the plurality of slots or the plurality of OFDM symbols is agreed in advance between the network device and the user equipment; or
the correspondence between the plurality of pieces of spatial relation information and the repetitions on the plurality of slots or the plurality of OFDM symbols is configured by the network device through the high layer signaling for the user equipment.

42. The method according to claim 40 or 41, wherein:

N pieces of spatial relation information are configured by the network devices for the target PUCCH resource through a MAC layer signaling, and the N pieces of spatial relation information are applied to respective repetitions of the PUCCH resource on N slots or N OFDM symbols.

43. The method according to claim 35, wherein step of receiving the UCI transmitted by the user equipment on the plurality of PUCCH resources determined according to the first message further comprises:
performing UCI detection after merging PUCCH signals on the plurality of PUCCH resources.

44. A network device, comprising:

a resource determining module, configured to determine a plurality of physical uplink control channel (PUCCH) resources for transmitting the same uplink control information (UCI);
an indicating module, configured to generate and send a first message to a user equipment, and configured to indicate the plurality of PUCCH resources to the user equipment, wherein the first message is DCI for scheduling a physical downlink shared channel (PDSCH) corresponding to the uplink control information or a high layer signaling for configuring transmission of the UCI; and
a receiving module, configured to receive the UCI transmitted by the user equipment on the plurality of PUCCH resources determined according to the first message.

45. The network device according to claim 44, wherein:

when the UCI is HARQ-ACK information, the indicating module is specifically configured to use DCI for scheduling a PDSCH corresponding to the HARQ-ACK information as the first message;

when the UCI is CSI, the indicating module is specifically configured to use a RRC signaling for configuring a PUCCH parameter set, a RRC signaling for configuring a CSI report or a MAC signaling for activating the CSI report as the first message.

46. The network device according to claim 44, wherein:

when the first message comprises a plurality of pieces of PUCCH resource indication information, the indicating module is specifically configured so that at least one PUCCH resource of the plurality of PUCCH resources is obtained by the user equipment according to indication of at least two pieces of PUCCH resource indication information; or
when first message comprises one piece of PUCCH resource indication information, the indicating module is specifically configured so that the plurality of PUCCH resources are determined by the user equipment according to the PUCCH resource indication information comprised in the first message and a plurality of PUCCH resource sets or PUCCH parameter sets configured by the network device in advance; or
when the PUCCH resource indication information in the first message is used for indicating a first PUCCH resource, the indicating module is specifically configured so that other PUCCH resources of the plurality of PUCCH resources are determined by the user equipment according to the first PUCCH resource; or
when the first message comprises an indicator value of the PUCCH resource indication information, the indicating module is specifically configured to determine a plurality of indicator values corresponding to the indicator value according to the indicator value of the PUCCH resource indication information, and determine at least one PUCCH resource according to at least two indicator values of the plurality of indicator values, respectively.

47. The network device according to claim 46, wherein when the first message comprises one piece of PUCCH resource indication information:

the indicating module is specifically configured to indicate the user equipment to determine one PUCCH resource respectively from at least two PUCCH resource sets of the plurality of PUCCH resource sets configured by the network device through the high layer signaling according to the PUCCH resource indication information to obtain the plurality of PUCCH resources; or
the indicating module is specifically configured to indicate the user equipment to determine one PUCCH resource respectively according to the PUCCH resource indication information and at least two PUCCH parameter sets of the plurality of PUCCH parameter sets configured by the network device through the high layer signaling to obtain the plurality of PUCCH resources.

48. The network device according to claim 44, wherein the plurality of PUCCH resources are repetitions of a target PUCCH resource on a plurality of slots or a plurality of OFDM symbols.

49. The network device according to claim 49, wherein the indicating module is further specifically configured to configure a plurality of pieces of spatial relation information for the target PUCCH resource, so that spatial relation information corresponding to the respective repetitions on the plurality of slots or the plurality of OFDM symbols is determined by the user equipment according to the plurality of pieces of spatial relation information.

50. The network device according to claim 49, wherein the indicating module is further specifically configured to agree a correspondence between the plurality of pieces of spatial relation information and the repetitions on the plurality of slots or the plurality of OFDM symbols in advance with the user equipment; or
the indicating module is further specifically configured to configure the correspondence between the plurality of pieces of spatial relation information and the repetitions on the plurality of slots or the plurality of OFDM symbols through the high layer signaling for the user equipment.

51. The network device according to claim 49 or 50, wherein the indicating module is specifically configured to configure N pieces of spatial relation information for the target PUCCH resource through a MAC layer signaling, and the N pieces of spatial relation information are applied to respective repetitions of the PUCCH resource on N slots or N OFDM symbols.

52. The network device according to claim 44, wherein the receiving module is further specifically configured to perform UCI detection after merging PUCCH signals on the plurality of PUCCH resources.

53. A network device, comprising: a processor and a memory, wherein

the memory stores an uplink control channel transmission program that is capable of being run on the processor, and the processor, when executing the uplink control channel transmission program, implements the uplink control channel transmission method according to any one of claims 35 to 43.

54. A computer-readable storage medium having an uplink control channel transmission program stored thereon, wherein the uplink control channel transmission program, when executed by a processor, implements the uplink control channel transmission method according to any one of claims 35 to 43.

Fig.1

Fig.2A

Fig.2B

| | slot | | | | | | |
|---|---|---|---|---|---|---|---|
| PDCCH | PUSCH | PUSCH | PUSCH | PUSCH | PDCCH | PUSCH |

DCI with SRI

DCI with SRI

## Fig.3

TRP 1    corporation    TRP 2

XXXX ⟷ XXXX

PUSCH

DCI with SRI

PUSCH

X X    X X

panel 1    panel 2

## Fig.4

| | slot | | | | | | |
|---|---|---|---|---|---|---|---|
| PUCCH1 | PUCCH1 | ... | ... | PUCCH2 | PUCCH2 | ... |

periodicity

## Fig.5

TRP 1   corporation   TRP 2

XXXX ⟷ XXXX

PUCCH1   PUCCH1

XX  XX

panel 1   panel 2

## Fig.6

determining a plurality of PUCCH resources
for transmitting the same uplink
control information (UCI) ⟋ ⎯110

generating and sending a first
message to a user equipment ⎯120

receiving the UCI transmitted by the user
equipment on the plurality of PUCCH resources
determined according to the first message ⎯130

## Fig.7

| PUCCH resource indication information 1 | → | PUCCH resource 1 |

| PUCCH resource indication information 2 | → | PUCCH resource 2 |

...   ...

| PUCCH resource indication information n | → | PUCCH resource n |

## Fig.8

PUCCH resource
indication information

PUCCH resource set1 → PUCCH resource1

PUCCH resource set2 → PUCCH resource2

... ...

PUCCH resource set n → PUCCH resource n

Fig.9

PUCCH resource
indication information

PUCCH
parameter set 1 → PUCCH resource1

PUCCH
parameter set 2 → PUCCH resource2

... ...

PUCCH
parameter set n → PUCCH resource n

Fig.10

200

210

resource determining
module

220

indicating module

230

receiving module

Fig.11

330

```
                                                          310
    332                    333
 ┌──────────┐      ┌──────────────┐      ┌──────────────┐
 │  memory  │      │   network    │      │   antenna    │
 │          │      │  interface   │      │              │
 └──────────┘      └──────────────┘      └──────────────┘

 ─────────────────────────────────────

          ┌──────────────┐          ┌──────────────────┐
          │  processor   │──────────│ radio frequency  │
          │              │          │     device       │
          └──────────────┘          └──────────────────┘

      331                                320
```

Fig.12

┌─────────────────────────────────────────────────┐
│ determining a plurality of PUCCH resources for   │
│ transmitting the same uplink control information  │      410
│ (UCI) and/or the number of the plurality of PUCCH │
│ resources according to a first message sent by a  │
│ network device                                    │
└─────────────────────────────────────────────────┘

┌─────────────────────────────────────────────────┐
│ transmitting the same uplink control information  │      420
│ (UCI) on the plurality of PUCCH resources         │
└─────────────────────────────────────────────────┘

Fig.13

```
                    ┌──────────────────────┐        ┌──────────────┐
                    │  PUCCH indicator     │        │    PUCCH     │
                 ┌─▶│ value of the resource│───────▶│  resource 1  │
                 │  │indication information 1│       │              │
                 │  └──────────────────────┘        └──────────────┘

┌──────────────┐ │  ┌──────────────────────┐        ┌──────────────┐
│ PUCCH resource│ │  │  PUCCH indicator     │        │    PUCCH     │
│  indication   │─┼─▶│ value of the resource│───────▶│  resource 2  │
│  information  │ │  │indication information 2│       │              │
└──────────────┘ │  └──────────────────────┘        └──────────────┘
                 │            ...                           ...
                 │  ┌──────────────────────┐        ┌──────────────┐
                 │  │  PUCCH indicator     │        │    PUCCH     │
                 └─▶│ value of the resource│───────▶│  resource n  │
                    │indication information n│       │              │
                    └──────────────────────┘        └──────────────┘
```

Fig.14

spatial relation spatial relation spatial relation spatial relation
information 1   information 2  information 3   information 4

| PUCCH1 | PUCCH1 | PUCCH1 | PUCCH1 | ... |

|←—slot—→|

Fig.15

spatial relation spatial relation spatial relation spatial relation
information 1   information 2  information 1   information 2

| PUCCH1 | PUCCH1 | PUCCH1 | PUCCH1 | ... |

|←—slot—→|

Fig.16

spatial relation   spatial relation spatial relation spatial relation
information 1   information 1 information 2   information 2

| PUCCH1 | PUCCH1 | PUCCH1 | PUCCH1 | ... |

|←—slot—→|

Fig.17

spatial relation spatial relation spatial relation spatial relation
information 1   information 2 information 2   information 1

| PUCCH1 | PUCCH1 | PUCCH1 | PUCCH1 | ... |

|←—slot—→|

Fig.18

Fig.19

Fig.20

## INTERNATIONAL SEARCH REPORT

| International application No. |
| --- |
| **PCT/CN2019/083969** |

| A. | CLASSIFICATION OF SUBJECT MATTER |
| --- | --- |
| | H04W 72/04(2009.01)i; H04L 1/18(2006.01)i |

According to International Patent Classification (IPC) or to both national classification and IPC

| B. | FIELDS SEARCHED |
| --- | --- |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, EPODOC, WPI: 多个, 上行控制信道, 上行控制信息, 相同, 重复, multi, UCI, PUCCH, same, repeat

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 102412880 A (CHINA ACADEMY OF TELECOMMUNICATIONS TECHNOLOGY) 11 April 2012 (2012-04-11) description, paragraphs [0142]-[0177] | 1-54 |
| X | CN 108811122 A (HUAWEI TECHNOLOGIES CO., LTD.) 13 November 2018 (2018-11-13) description, paragraph [0002] | 1-54 |
| X | CN 109152014 A (CHINA ACADEMY OF TELECOMMUNICATIONS TECHNOLOGY) 04 January 2019 (2019-01-04) description, paragraphs [0189]-[0299] | 1-54 |
| A | CN 108737311 A (BEIJING SAMSUNG TELECOM R&D CENTER et al.) 02 November 2018 (2018-11-02) entire document | 1-54 |
| A | WO 2016204585 A1 (SAMSUNG ELECTRONICS CO., LTD.) 22 December 2016 (2016-12-22) entire document | 1-54 |
| A | US 2013028205 A1 (QUALCOMM INCORPORATED) 31 January 2013 (2013-01-31) entire document | 1-54 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2019** | **30 December 2019** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/083969**

| Patent document cited in search report | | | Publication date (day/month/year) | Patent family member(s) | | | Publication date (day/month/year) |
|---|---|---|---|---|---|---|---|
| CN | 102412880 | A | 11 April 2012 | None | | | |
| CN | 108811122 | A | 13 November 2018 | None | | | |
| CN | 109152014 | A | 04 January 2019 | WO | 2018228044 | A1 | 20 December 2018 |
| CN | 108737311 | A | 02 November 2018 | CN | 109413691 | A | 01 March 2019 |
| | | | | CN | 109219120 | A | 15 January 2019 |
| | | | | WO | 2018194352 | A1 | 25 October 2018 |
| | | | | CN | 109803319 | A | 24 May 2019 |
| | | | | CN | 109327868 | A | 12 February 2019 |
| WO | 2016204585 | A1 | 22 December 2016 | EP | 3311517 | A1 | 25 April 2018 |
| | | | | KR | 20180010224 | A | 30 January 2018 |
| | | | | US | 2018310298 | A1 | 25 October 2018 |
| | | | | CN | 106257856 | A | 28 December 2016 |
| US | 2013028205 | A1 | 31 January 2013 | WO | 2013016525 | A2 | 31 January 2013 |
| | | | | EP | 2737653 | A2 | 04 June 2014 |
| | | | | JP | 2016042707 | A | 31 March 2016 |
| | | | | US | 2017013625 | A1 | 12 January 2017 |
| | | | | RU | 2014106992 | A | 10 September 2015 |
| | | | | MX | 2014000979 | A | 27 February 2014 |
| | | | | CA | 2842693 | A1 | 31 January 2013 |
| | | | | KR | 20140057281 | A | 12 May 2014 |
| | | | | JP | 2014526196 | A | 02 October 2014 |
| | | | | AU | 2012286795 | A1 | 27 February 2014 |
| | | | | EP | 3496323 | A1 | 12 June 2019 |
| | | | | HK | 1197325 | A1 | 09 January 2015 |
| | | | | CN | 103797747 | A | 14 May 2014 |

Form PCT/ISA/210 (patent family annex) (January 2015)